# FASCICULE DE BREVET EUROPEEN

(11) **EP 0 596 820 B1**
(45) Date de publication et mention de la délivrance du brevet: **05.03.1997**
(21) Numéro de dépôt: 93440091.2
(22) Date de dépôt: 05.11.1993
(51) Int. Cl.: B65G 21/08

(54) **Enveloppe de protection et d'isolation à panneaux amovibles pour unité de transfert**
Schutz - und Dämmverkleidung mit abnehmbaren Platten für Fördereinheit
Protective and insulating cover with removable panels for conveyor unit

(30) Priorité: 06.11.1992 FR 9213580; 12.11.1992 FR 9213762; 12.11.1992 FR 9213763
(43) Date de publication de la demande: 11.05.1994
(73) Titulaire: RIONDE S.A., 88800 Vittel (FR)
(72) Inventeur: Rionde, Guy, F-88800 Vittel (FR)
(74) Mandataire: Metz, Paul

(56) Documents cités:
- DE-A- 2 253 812
- FR-A- 2 454 986
- US-A- 4 093 066

## Description

La présente invention se rapporte à une enveloppe de protection et d'isolation à panneaux amovibles pour convoyeur à bande ou à chaîne.

Elle concerne plus particulièrement les convoyeurs transportant des produits alimentaires tels que boissons ou aliments solides dans des contenants rigides, mais les autres types de convoyeurs, par exemple dans les contres de tri, de contrôle ou d'acheminement de produits sont également concernés.

Le bruit provoqué par la circulation de bouteilles en verre, ou de boîtes métalliques transportées par des convoyeurs d'un poste de remplissage à un poste de finition, fermeture, encapsulage, bouchonnage ou autre, peut atteindre des niveaux sonores élevés, voire dangereux ou insupportables.

On connaît déjà des ensembles de capotage en forme de tunnel ou de caisson destinés à recouvrir le convoyeur pour étouffer, ou du moins amoindrir la pollution sonore et offrir une protection sous la forme d'une séparation mécanique avec l'extérieur.

Ces ensembles de capotage sont formés d'une surface latérale constituée d'une succession de panneaux insonorisants assemblés entre eux et montés sur une ossature fixée aux montants et à des piètements supportant le convoyeur. Une fermeture supérieure transparente en forme de tunnel ou de caisson à trappe d'accès permet la surveillance du transit et les interventions de sécurité ou de maintenance.

Une fermeture inférieure assure la continuité de l'isolation phonique et de la protection mécanique.

Toutes les pièces constituant cette protection sont fixées sur des éléments-support solidaires de l'ossature, elle même montée sur le corps du convoyeur ou les piètements le supportant.

La fixation s'effectue de façon traditionnelle par vis, boulons, rivets etc. Elle ne permet donc ni une pose ni un démontage rapides.

Il existe bien des volets ou trappes d'accès, mais de façon ponctuelle en quelques endroits précis situés pratiquement exclusivement sur la surface supérieure. Ces ouvertures ne permettent qu'un accès limité à une zone restreinte autour du passage ainsi constitué. Elles représentent par ailleurs un surcoût sensible.

On peut citer à cet effet tout d'abord le brevet français n° 2 454 986 au nom de MASSICOT. Celui-ci décrit une réalisation dont la protection supérieure constituée de capots en forme de tunnel coulissant l'un dans l'autre est doublée d'une protection inférieure en gouttière pourvue d'un habillage insonorisant maintenu sur les bords par des agrafes et s'ouvrant à la manière d'une coquille.

Il y a lieu de remarquer, tout d'abord, que cette protection ne peut convenir qu'à des portions de convoyeurs en lignes droites.

Ensuite, les moyens de base, dont la couverture inférieure et les rails de guidage, se montrent difficilement démontables. De ce fait, une intervention nécessitant la dépose de ces éléments ne peut se révéler que lente et malaisée.

On peut citer ensuite, le brevet américain n° 4,093,066 au nom de la société COCA COLA Company qui se rapporte à un module d'insonorisation d'une forme générale en tunnel avec retour enveloppant sur la partie inférieure du convoyeur.

Les faces latérales sont inclinées. L'une est obscure, se poursuivant au-delà de la zone supérieure, l'autre est réalisée sous la forme d'une trappe.

Ces modules sont susceptibles d'assemblage en suites linéaires par l'intermédiaire d'arceaux de jonction montés sur des supports solidaires des piètements soutenant le convoyeur.

L'assemblage de ces modules nécessite des fixations spéciales et un outillage.

Par ailleurs, le volume à isoler n'est pas totalement fermé. Il existe en partie inférieure une zone non protégée.

Finalement, l'ensemble d'un circuit de convoyeur ne peut être protégé par la succession de tels modules, ceux-ci n'étant adaptés qu'à des lignes droites.

La mise en place de la structure métallique porteuse puis la pose de chaque élément de la paroi avec perçage, montage des pattes de fixation, adaptation, vissage, nécessitent une immobilisation importante en heures de main d'oeuvre.

Par ailleurs, la paroi est difficilement modifiable. Le remplacement d'une seule partie suite à une détérioration n'est pas réalisable de façon simple. Le montage et le démontage restent des opérations longues et difficiles à mettre en oeuvre. Elles nécessitent bien souvent l'arrêt du convoyeur.

Pour la paroi de fermeture supérieure, il serait intéressant de pouvoir ouvrir ou dégager une zone pour l'observation et l'accès en vue d'une intervention d'entretien ou de réparation sur la bande de transfert.

Cette fonction est assurée actuellement par des volets de fermeture montés sur charnières. Ces volets sont malaisés à manipuler car il s'agit de pièces de dimensions importantes. De plus, il ne peuvent se détacher et constituent de ce fait une gêne sérieuse pour certains types d'interventions. En outre, leur remplacement s'avère long et compliqué.

Le brevet européen n° 102 910 au nom du demandeur décrit une réalisation correspondant à cet état antérieur de la technique.

Par ailleurs, lors du transport de bouteilles sur une unité de transfert, convoyeur à bande ou autre, il arrive que les secousses du déplacement ou une fausse manipulation provoquent une inclinaison telle des contenants qu'une partie de leur contenu se déverse ou bien entraîne un déséquilibre d'un ou de plusieurs d'entre eux qui tombent alors de côté en se déversant avec bris éventuel.

Avec un convoyeur non protégé en partie inférieure, les débris de verre et le liquide se répandent sur une surface importante du sol difficilement accessible sous la bande convoyeuse, donc pénible à nettoyer.

Le carénage, notamment inférieur, joue le rôle de protection du convoyeur, de retenue et de récupération des débris et déchets ou liquides renversés, etc...

On connaît différents types de carénages inférieurs pour la protection de convoyeurs.

Les carénages fixes sont peu pratiques, car ils sont eux-mêmes difficiles à nettoyer.

Le carénage inférieur décrit dans le brevet français n° 2 454 986 MASSICOT est constitué de panneaux montés à pivotement par des charnières latérales sur un côté du convoyeur. Chaque panneau est lui-même articulé en deux parties latérales.

Si cette protection permet un accès facile au convoyeur et son nettoyage, les panneaux articulés sont encombrants et lourds à manipuler. Ils constituent une structure définitive construite sur mesure et peu adaptable aux modifications ultérieures du convoyeur.

De plus, si les débris et le liquide sont retenus dans un premier temps par les panneaux articulés de carénage, il risquent, au moment de l'ouverture inférieure du panneau, de se répandre sur le sol.

La fermeture totale concerne aussi bien la fermeture latérale que les fermetures supérieure et inférieure le long d'un convoyeur dans ses parties droites, courbes et anguleuses.

A cet effet, l'invention consiste en une enveloppe de fermeture totale entièrement amovible par emboîtement/déboîtement de panneaux amovibles pour unité de transfert qui est constituée :
. d'une surface latérale formée de panneaux montés emboîtables et amovibles entre un profilé inférieur porteur et un profilé supérieur de maintien et séparés latéralement par des profilés de jonction,
. d'une couverture supérieure formée de panneaux inclinés à extrémité logée à emboîtement dans une cavité linéaire d'un profilé supérieur arrière disposés en appui-blocage sur un profilé avant et séparés par des profilés de jonction,
. d'une fermeture inférieure constituée d'un profilé central collecteur, de deux profilés inférieurs porteurs en regard et de plaques amovibles inclinées vers le profilé central collecteur.

La présente invention a pour but, non seulement de faciliter notablement le montage, mais de procurer un accès rapide à une zone quelconque du convoyeur.

Elle permet d'éliminer tous les inconvénients mentionnés ci-dessus.

Les avantages de l'invention sont nombreux et importants. On en citera quelques-uns ci-après.

La mise en place de la paroi est effectuée rapidement. Seuls les deux profilés de maintien sont préalablement fixés, par exemple par vissage, sur la structure supérieure du convoyeur. Les panneaux amovibles se mettent ensuite en place de manière évidente par simple insertion d'emboîtement et appui-blocage.

La paroi est adaptable à tous types de convoyeurs, grâce aux différents modèles de panneaux amovibles.

Le remplacement d'un panneau de paroi détérioré, la modification d'une partie ou de la totalité de la paroi en fonction des besoins, sont extrêmement facilités.

La présence de volets pivotants montés sur des charnières fixes est rendue facultative par la facilité à porter ou déplacer un panneau afin d'accéder à l'intérieur.

Le montage de la paroi selon l'invention est rapide. Il ne nécessite aucun matériel ou outillage. Aucun ajustement des différents éléments n'est nécessaire.

La paroi peut être facilement démontée, en tout ou en partie, pour avoir accès à une zone particulière située à un endroit quelconque, ou pour remplacer un panneau défectueux ou détérioré par exemple.

La forme de la paroi est adaptable à de multiples formes de convoyeurs, en utilisant différents panneaux. Les panneaux sont interchangeables.

L'assemblage par encastrement est rapide, fiable et efficace. La construction sans pièce de verrouillage ajoutée ou mobile s'avère d'une grande simplicité.

La protection d'isolation et de récupération inférieure peut être adaptée à de multiples largeurs, hauteurs, parcours droits ou courbes de tous les convoyeurs.

Le montage est simple et rapide, la structure fixe étant réduite au minimum, les autres pièces étant amovibles.

La taille des plaques latérales importe peu, elles ne sont pas articulées de manière permanente sur la structure porteuse, mais peuvent être enlevées et éloignées selon les besoins.

On peut ainsi accéder très simplement à une partie ou à tout un côté de la partie basse du convoyeur.

Le profilé de récupération évite aux liquides et débris d'atteindre le sol. Il les collecte en position centrale la plus basse.

Le nettoyage de ce profilé s'avère beaucoup plus facile.

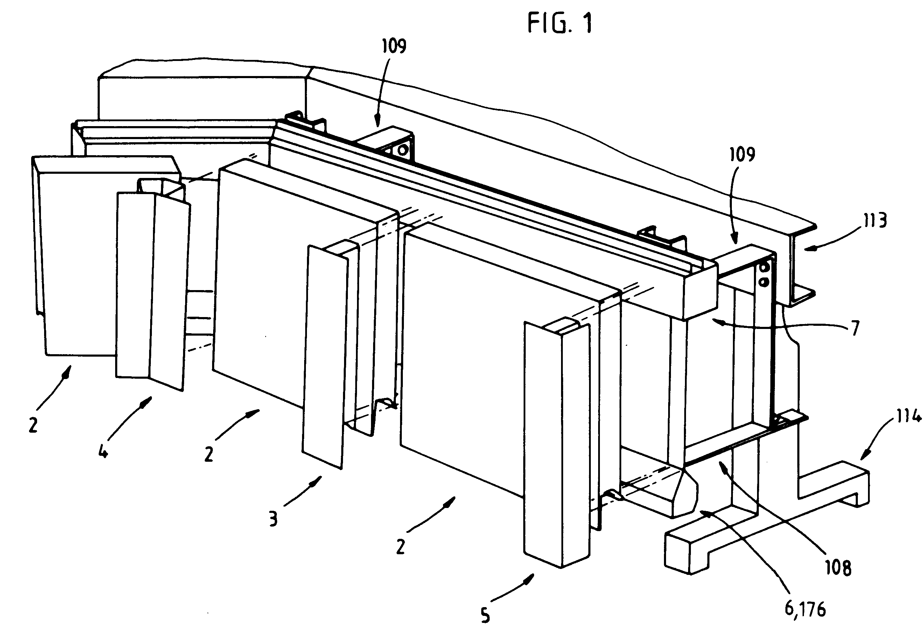

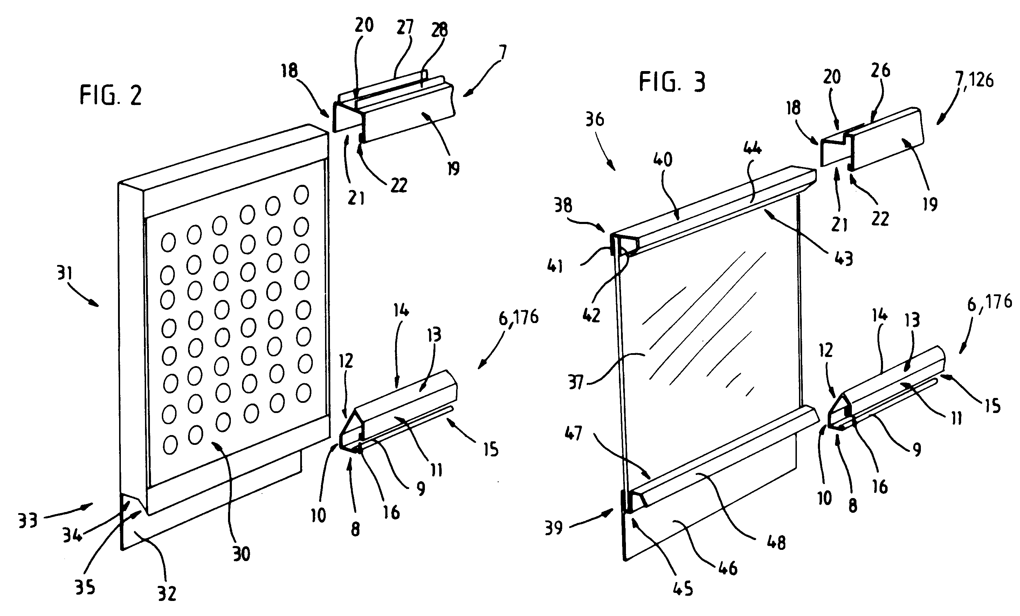

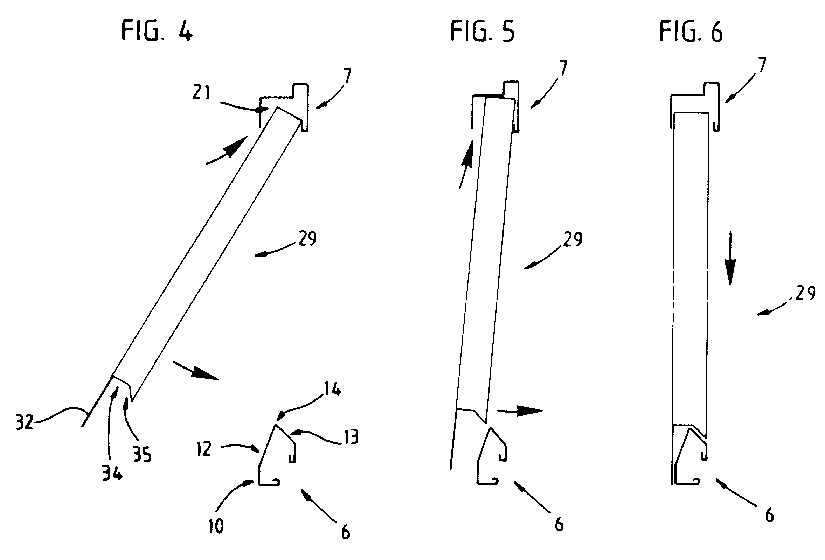

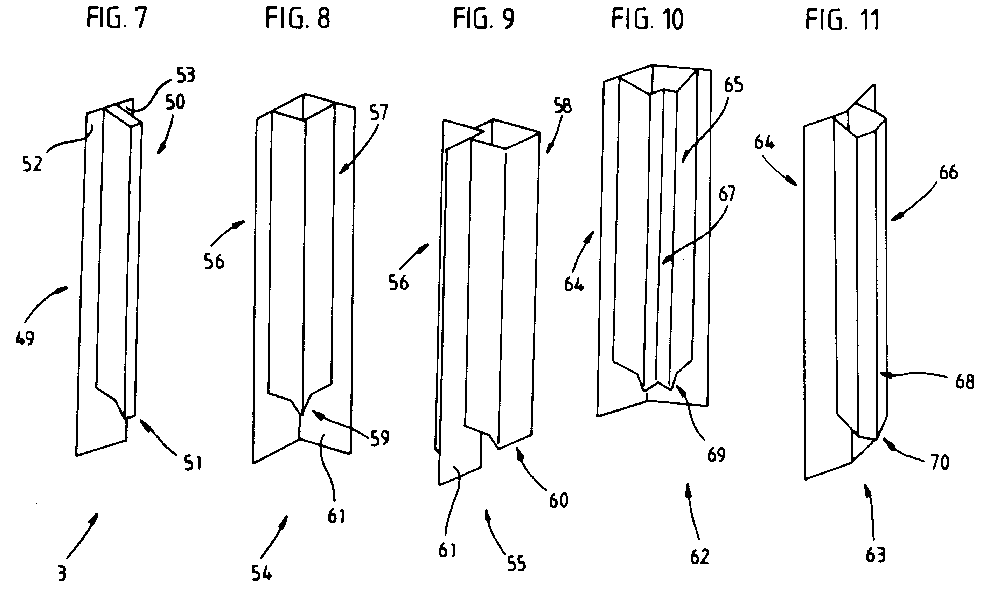

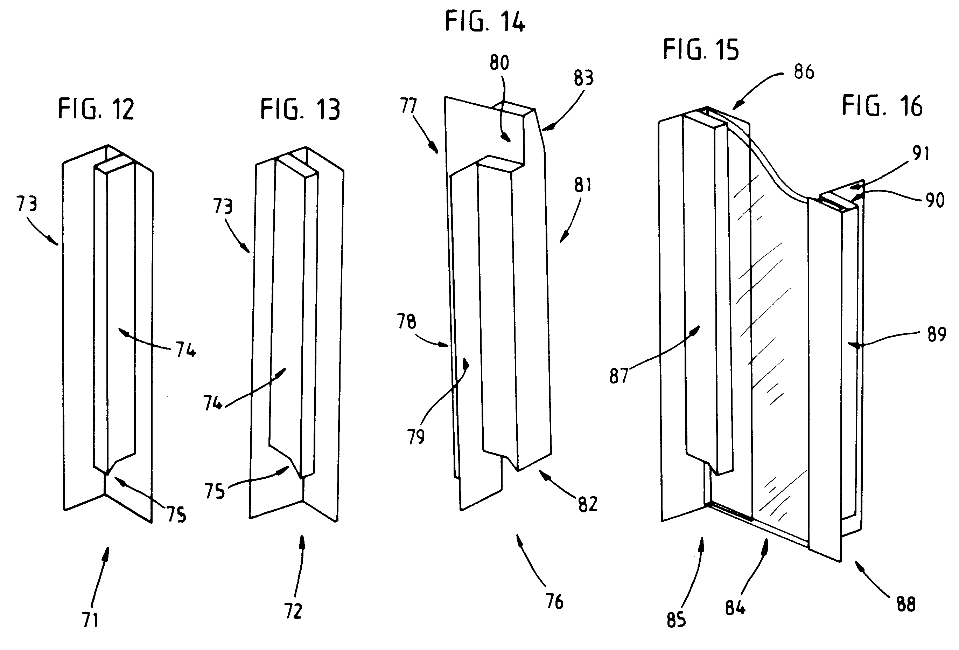

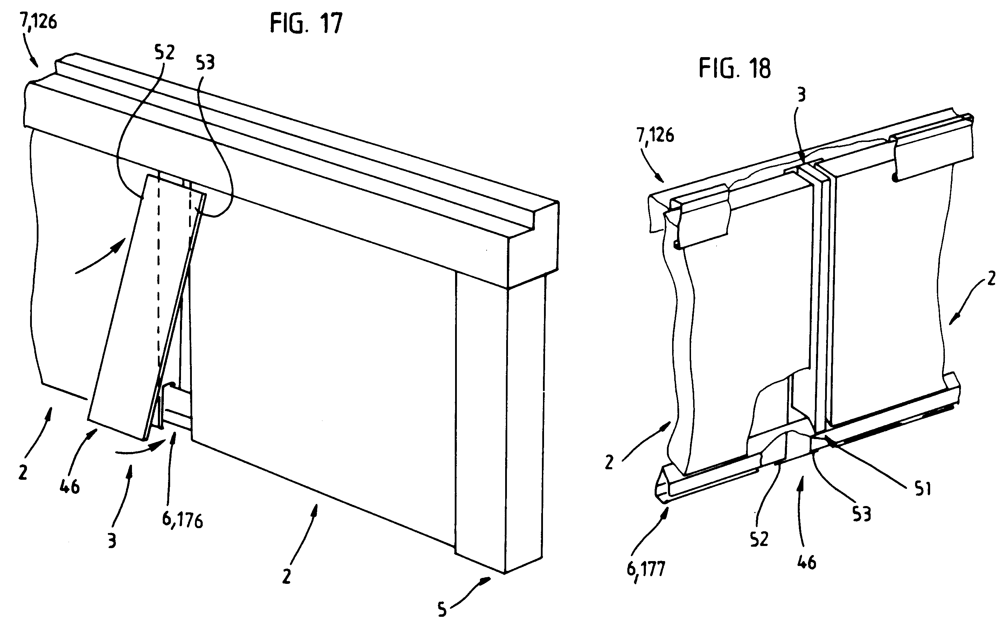

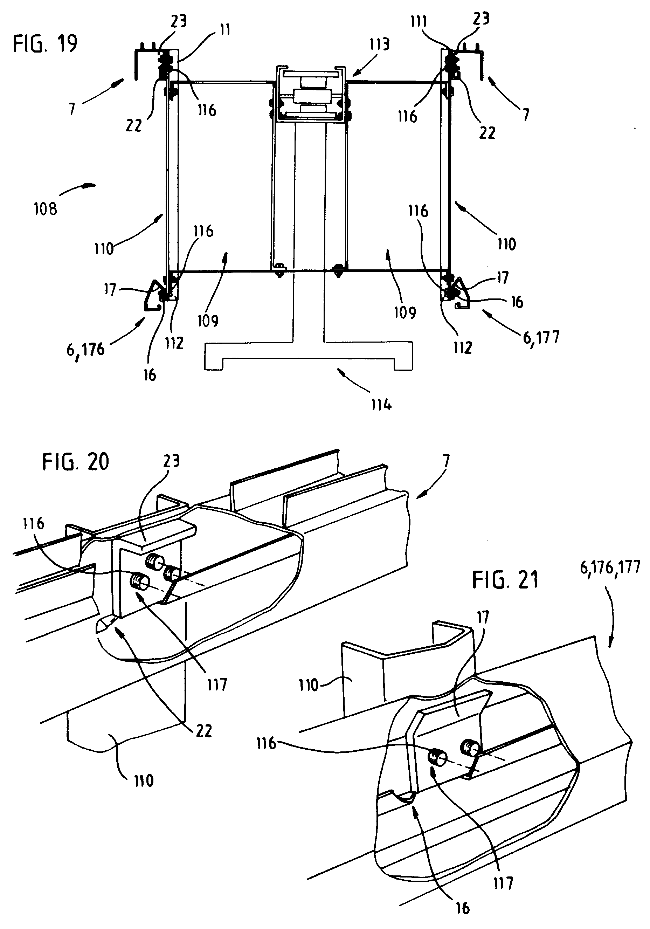

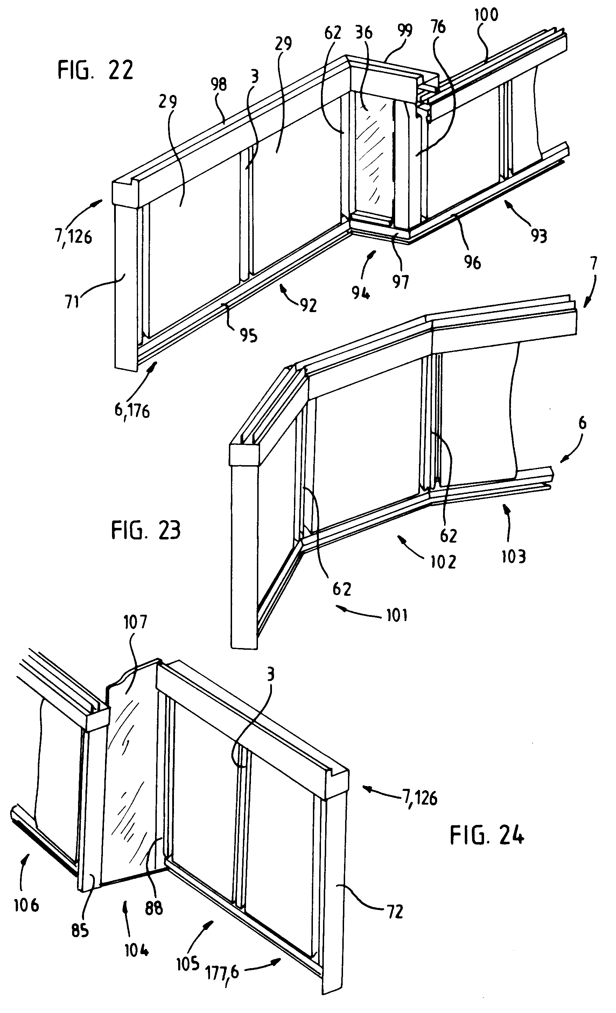

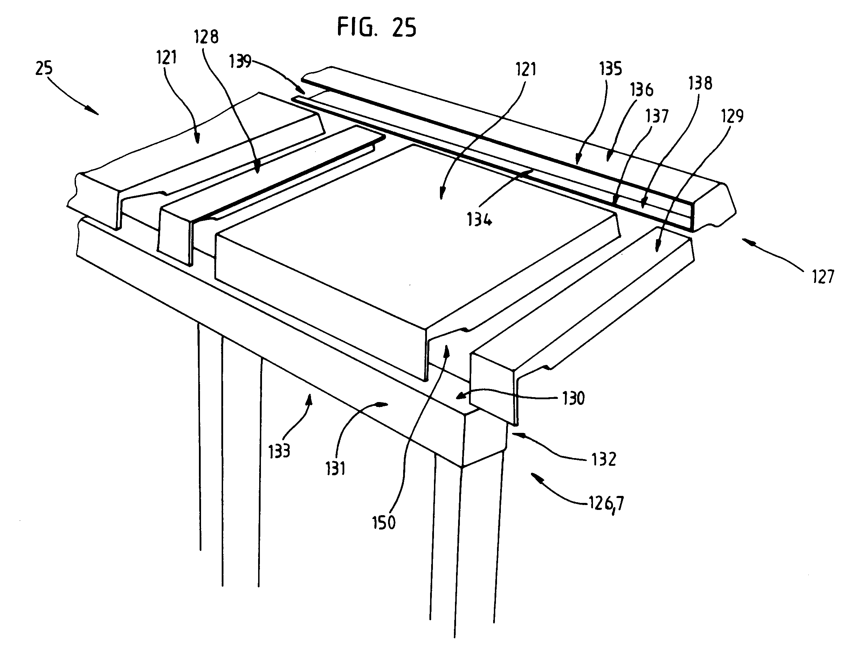

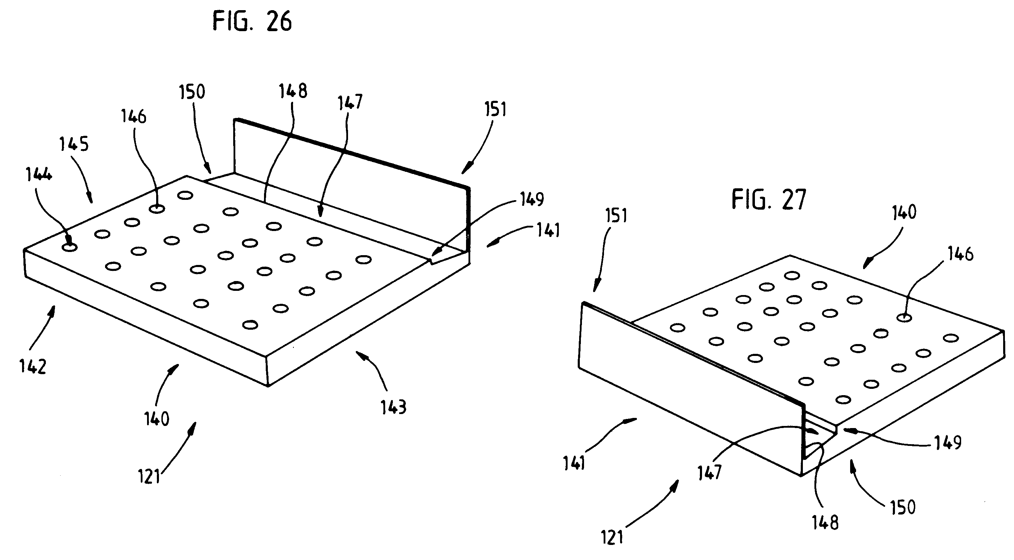

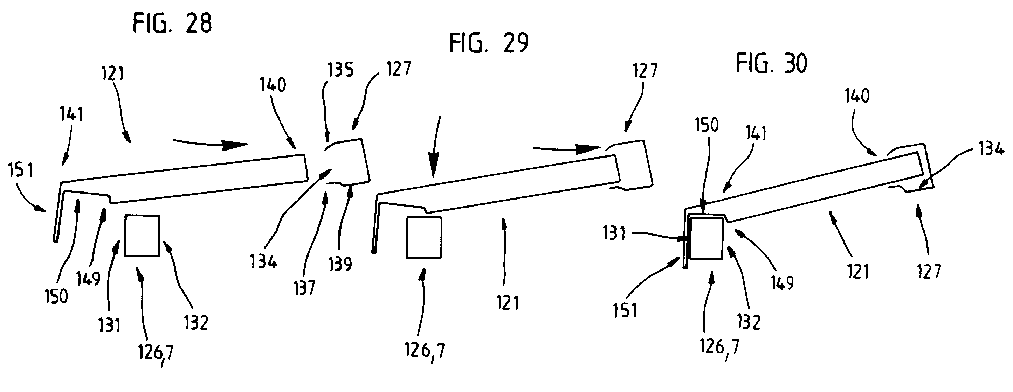

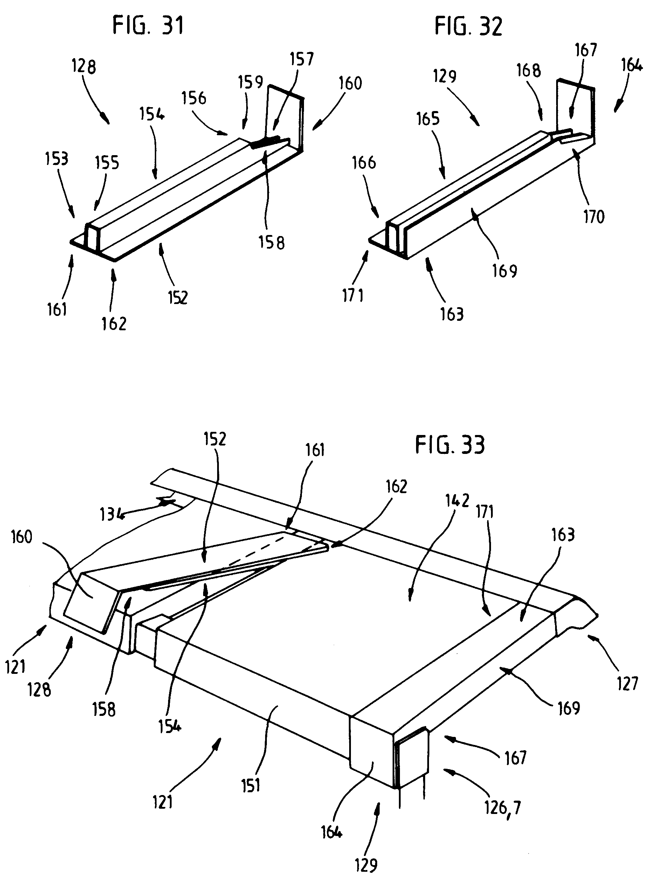

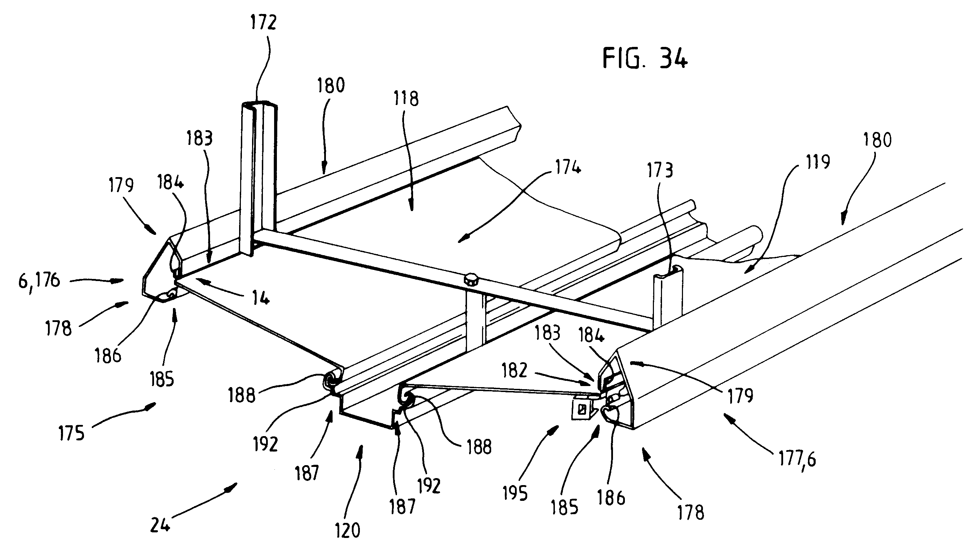

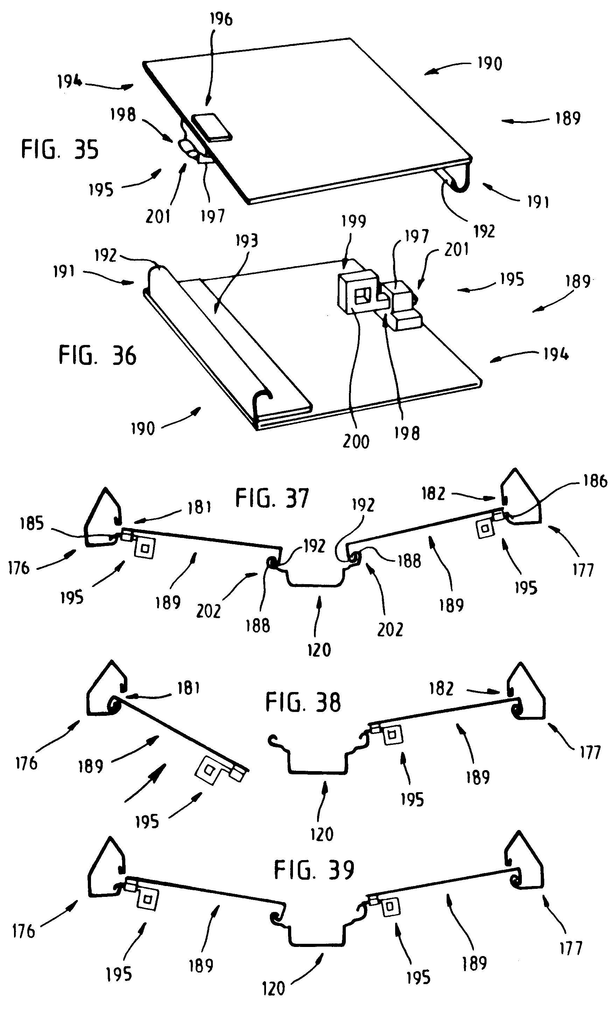

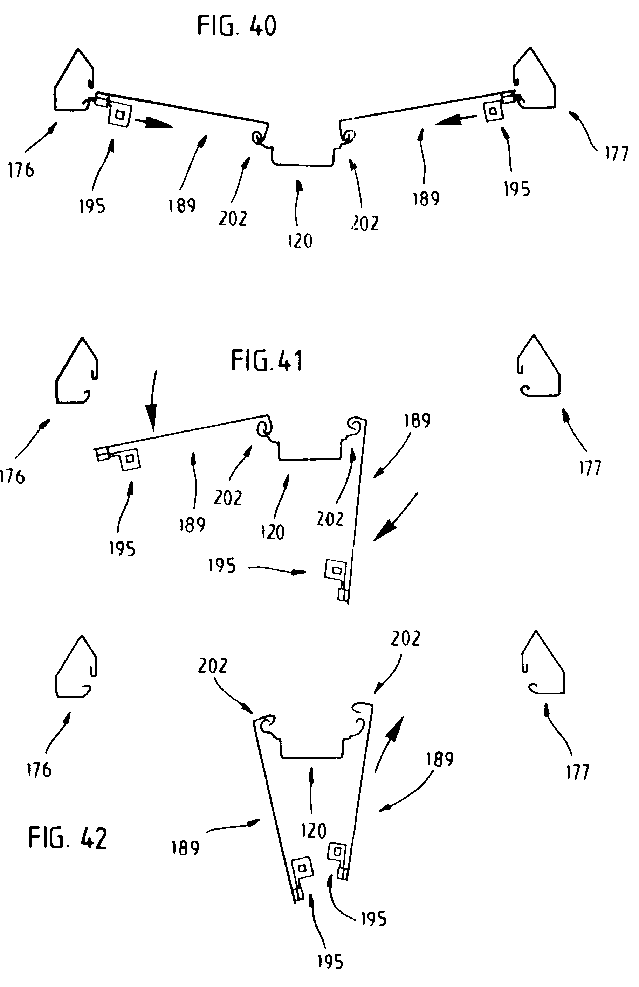

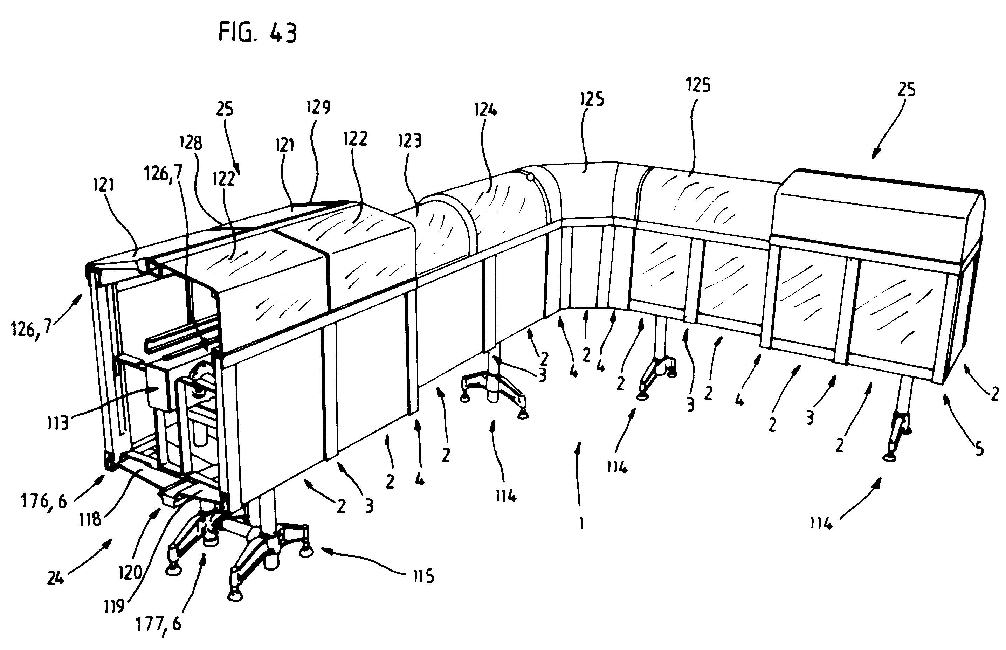

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue de l'avant en perspective dissociée d'un tronçon courant d'une paroi latérale formée par le montage d'une succession d'éléments insérés les uns à la suite des autres dans un profilé supérieur d'encastrement et reposant sur un profilé inférieur porteur ;
. la figure 2 est une vue schématique en perspective montrant un panneau et ses deux profilés dont un profilé inférieur porteur et un profilé supérieur de maintien avant son montage ;
. la figure 3 est une vue analogue à la figure 2 dans le cas d'un panneau sous forme de plaque ;
. les figures 4, 5 et 6 sont des vues schématiques de profil illustrant le montage d'un panneau entre les profilés supérieur de maintien et inférieur porteur ;
. la figure 7 est une vue en perspective de l'arrière d'un profilé de jonction latérale plane ;
. les figures 8 et 9 sont des vues en perspective de l'arrière de profilés de jonction latérale de type raccordement d'angle droit, respectivement sortant et rentrant ;
. les figures 10 et 11 sont des vues en perspective de l'arrière de profilés de jonction latérale de type raccordement d'angle ouvert, respectivement sortant et rentrant :
. les figures 12 et 13 sont des vues en perspective de l'arrière de profilés de jonction latérale de type raccordement d'extrémité, respectivement droit et gauche ;
. la figure 14 est une vue en perspective de l'arrière d'un profilé de jonction latérale de type raccordement d'angle droit rentrant avec changement de hauteur de la paroi ;
. les figures 15 et 16 sont des vues en perspective de l'arrière de profilés de jonction latérale de type raccordement d'angle droit, respectivement sortant et rentrant, avec changement de hauteur de la paroi et maintien d'un panneau transparent transversal ;
. la figure 17 est une vue en perspective de l'avant d'une partie de paroi illustrant la mise en place et le rôle de recouvrement-blocage d'un profilé de jonction latérale plane ;
. la figure 18 est une vue en perspective de l'arrière correspondant à la figure 17 après mise en place du composant intermédiaire, avec brisures représentant les positions respectives des éléments entre les deux profilés de maintien ;
. la figure 19 est une vue schématique en coupe transversale d'un tronçon de convoyeur montrant une structure de fixation des profilés de maintien ;
. les figures 20 et 21 sont des vues en perspective des profilés respectivement supérieur et inférieur, partiellement ouverts pour montrer le montage des profilés de maintien sur la structure de fixation ;
. les figures 22, 23 et 24 sont des vues en perspective de l'arrière de fractions linéaires de parois latérales réalisées avec des panneaux et profilés de jonction et d'extrémité ;
. la figure 25 est une vue en perspective dissociée d'une paroi supérieure d'isolation pour une unité de transfert ;
. les figures 26 et 27 sont des vues en perspective d'un panneau amovible de type caisson, retourné, représenté respectivement de l'avant et de l'arrière ;
. les figures 28, 29, 30 sont des vues en coupe schématiques illustrant la mise en place d'un panneau amovible entre deux profilés porteurs ;
. les figures 31 et 32 sont des vues en perspective de l'arrière de composants profilés de jonction, respectivement un profilé de jonction intermédiaire plane et un profilé de jonction d'extrémité ;
. la figure 33 est une vue en perspective d'une section de paroi illustrant la mise en place d'un profilé de jonction ;
. la figure 34 est une vue générale en perspective d'une protection inférieure d'isolation et de récupération ;
. la figure 35 est une vue en perspective d'une des plaques latérales amovibles constituant la protection selon l'invention ;
. la figure 36 est une vue en perspective de la plaque latérale retournée ;
. la figure 37 est une vue schématique de profil de la variante de base du montage des plaques articulées amovibles ;
. les figures 38 et 39 sont des vues schématique de profil de deux autres variantes simples du montage des plaques ;
. les figures 40, 41 et 42 sont des vues schématiques de profil illustrant le fonctionnement des plaques articulées et amovibles dans la variante simple de montage correspondant à la figure 37 ;
. la figure 43 est une vue en perspective d'un exemple de convoyeur mettant en oeuvre des parois latérales gauche et droite de protection selon l'invention, réunissant un tronçon en tunnel et deux tronçons équipés d'une protection en caisson.

L'idée de protection générale inventive consiste à constituer l'enveloppe totale d'un convoyeur uniquement par des panneaux amovibles. Elle comporte tout d'abord une paroi latérale 1 de protection d'un convoyeur ou d'un autre matériel ou équipement par une succession d'éléments plans amovibles ou panneaux 2 séparés par des composants profilés de jonction latérale, jonction latérale plane 3, jonction d'angle 4 ou jonction d'extrémité 5, également amovibles, portés et maintenus sans fixation(s) entre deux profilés longitudinaux de bordure, respectivement inférieur porteur 6 et supérieur de maintien 7.

Elle comporte également une protection et isolation inférieure et une protection supérieure formées de panneaux amovibles.

Plus particulièrement, les éléments plans ou panneaux reposent avec immobilisation par leur partie inférieure sur le profilé inférieur porteur 6 et sont simplement immobilisés transversalement, c'est-à-dire maintenus verticaux par le profilé supérieur de maintien 7 à leur partie supérieure.

Le détail et la particularité des modes d'immobilisation et de maintien des éléments ainsi que les formes techniques des profilés apparaîtront dans la description qui suit.

La paroi latérale de protection selon l'invention s'applique à un convoyeur à chaîne ou à bande ou autre équipement, par exemple fermé en partie supérieure par une protection supérieure et en partie inférieure par un carénage.

L'invention concerne toute la surface latérale sur l'ensemble de la longueur d'un convoyeur même dans les angles ou dans les courbes en lignes brisées. Elle concerne également les deux surfaces transversales d'extrémité opposées.

En se reportant aux figures on constate que la paroi latérale 1 selon l'invention est formée dans ses parties droites et dans ses parties en lignes brisées par la succession des éléments plans ou panneaux tels que 2 séparés par des composants ou profilés de jonction latérale, jonction latérale plane 3, d'angle 4 ou les profilés de jonction d'extrémité tels que 5.

Ces divers éléments et composants sont représentés plus en détail sur les figures.

L'ensemble des panneaux constituant la paroi latérale 1, par exemple celle d'un convoyeur, sont montés entre un profilé longitudinal inférieur porteur 6, et un profilé longitudinal supérieur de maintien 7 formant la bordure longitudinale supérieure de la paroi latérale, le profilé supérieur étant disposé horizontalement, parallèlement au profilé inférieur porteur 6 et au-dessus de celui-ci.

Comme déjà indiqué, entre ces deux profilés longitudinaux de bordure 6 et 7 sont montés sans aucun outil ou outillage une succession de panneaux amovibles 2 séparés en ligne droite ou aux angles par les profilés de jonction latérale plane, d'angle ou d'extrémité.

Le mode d'accrochage sur les deux profilés de bordure est commun à l'ensemble des panneaux amovibles et aux profilés de jonction latérale.

Le profilé inférieur porteur 6 est formé par exemple par profilage ou pliage à froid et présente une face inférieure horizontale 8 à bord longitudinal enroulé 9, deux faces latérales avant et arrière planes 10 et 11, et deux faces supérieures en rampes inclinées avant et arrière 12 et 13 inégales qui forment une arête porteuse 14 en biseau et constituent avec la face latérale avant le moyen de soutien-immobilisation de la partie inférieure des panneaux.

Les bords longitudinaux de la face latérale arrière et de la face inférieure sont disjoints et décalés de façon à ménager une fente longitudinale 15. Le bord longitudinal libre de la face latérale arrière est recourbé en gouttière de manière à constituer une bordure 16 de coulissement-guidage et maintien en inclinaison pour une contre-pièce de fixation 17 représentée en détail sur la figure 21.

Le profilé supérieur de maintien 7, de forme générale de section rectangulaire, présente deux faces latérales parallèles avant et arrière 18 et 19 réunies par une face supérieure 20. Ces faces délimitent entre elles une cavité linéaire d'insertion ou d'encastrement 21 parallélépipédique et totalement ouverte vers le bas constituant un volume récepteur pour le maintien après introduction des bords supérieurs des panneaux ou de la garniture linéaire habillant ces bords pour en augmenter la section, ou des extrémités supérieures des profilés de jonction latérale. Le bord inférieur de la face latérale arrière 19 est recourbé pour constituer une gouttière 22 de maintien en position droite et de guidage-coulissement pour une contre-pièce 23 de fixation visible en détail sur la figure 20.

Le bord enroulé 9 de la face inférieure horizontale 8 du profilé inférieur sert d'articulation de pivotement pour le bord longitudinal également enroulé de volets de fermeture pouvant constituer un carénage inférieur 24 pour compléter la protection en partie inférieure. Ces volets, ou tout autre type de protection constituant le carénage 24 fermant la partie basse du convoyeur, peuvent également être simplement insérés et immobilisés dans la fente longitudinale 15.

La face supérieure 20 du profilé supérieur 7 permet également d'associer la paroi latérale à une protection de recouvrement supérieure 25. A cet effet, elle peut être conformée de plusieurs façons différentes, selon le type de protection supérieure.

Tout d'abord, il s'agit d'une face plane pour l'appui, le blocage ou la fixation de panneaux de protection supérieure, par exemple des plaques d'insonorisation. Le profilé présente alors une section générale en U ouvert vers le bas.

Il s'agit ensuite d'une saillie longitudinale 26 à section rectangulaire destinée à servir de butée linéaire pour le bord longitudinal extérieur de trappes pivotantes (figure 3).

Il s'agit également de structures de guidage et blocage sous la forme de deux rails parallèles 27 et 28 pour le déplacement linéaire de capots en tunnel coulissant l'un dans l'autre d'un autre type de protection supérieure.

Sur les figures, l'une ou l'autre de ces variantes de conformation sera indifféremment représentée.

Ces conformations de la face inférieure du profilé inférieur porteur avec les retours de bordure enroulés, et de la face supérieure du profilé supérieur de maintien, plane ou avec profils de guidage, sont donc utilisées pour l'accrochage d'éléments complémentaires de protection constituant le carénage inférieur et la protection de recouvrement supérieure, de manière à former une enveloppe protectrice continue et complète autour de la bande convoyeuse, dans un but notamment d'insonorisation.

On se reportera à la figure 25 pour l'illustration d'un convoyeur équipé d'une telle enveloppe protectrice.

Deux panneaux constituant la paroi latérale 1, de types différents, sont représentés sur les figures 2 et 3.

On distingue d'abord un panneau-caisson 29 en forme de caisson parallélépipédique en tôle d'acier inoxydable contenant un complexe isolant et insonorisant, par exemple sous la forme d'un matelas de mousse occupant entièrement l'intérieur du caisson.

Les vibrations ou analogues sont absorbées par le matelas de mousse à travers une plaque perforée de face arrière 30.

Du côté extérieur, le panneau présente une plaque de face avant plane 31. Cette plaque avant est de hauteur supérieure à celle du caisson et son extrémité inférieure en saillie forme un bandeau 32 d'extrémité dépassant vers le bas du bord inférieur du caisson, permettant de cacher le profilé porteur inférieur adjacent et servant d'appui contre la face avant 10 plane du profilé inférieur.

Le caisson présente également une face inférieure 33 comportant le long de son bord longitudinal arrière une conformation linéaire d'accrochage formée de la succession d'un profil plat 34 et d'une rampe linéaire inclinée d'appui 35 coopérant en vue d'un appui-blocage avec la rampe inclinée supérieure arrière 13 du profilé inférieur porteur 6.

L'épaisseur du caisson, au moins au niveau de sa bordure d'extrémité supérieure, est légèrement inférieure à la largeur de la cavité d'insertion 21 du profilé supérieur de maintien 7, de manière à pouvoir engager le panneau de biais.

L'accrochage du panneau est réalisé comme décrit ci-dessous en référence aux figures 4 à 6.

Le bord supérieur du panneau est inséré de biais dans la cavité linéaire d'insertion 21 du profilé supérieur de maintien jusqu'à venir en butée contre sa face supérieure.

Le panneau est alors ramené vers l'intérieur jusqu'à contact du bandeau 32 d'extrémité inférieure contre la face avant 10 du profilé inférieur porteur utilisée comme butée. Lors de ce mouvement, la rampe inclinée d'accrochage 35 passe au-dessus de l'arête porteuse 14 du profilé inférieur porteur 6.

Le panneau latéral est ensuite libéré et vient occuper une position basse dans laquelle la rampe linéaire inclinée d'appui 35 vient en contact d'appui contre la rampe inclinée arrière 13 de soutien-accrochage du profilé inférieur porteur 6.

Le panneau latéral est maintenu droit par son extrémité supérieure en raison de l'encastrement dans la cavité linéaire d'insertion 21 du profilé supérieur de maintien 7, et son appui par son bord inférieur sur l'arête porteuse 14 du profilé inférieur 6 qu'il chevauche.

Le bandeau 32 d'extrémité inférieure en saillie de la plaque de face avant 31 du panneau latéral dissimule totalement le profilé inférieur 6.

Pour décrocher le panneau, on procède très simplement dans l'ordre inverse.

Bien entendu, les dimensions du panneau latéral sont adaptées à celles des profilés porteurs 6 et de maintien 7. La hauteur du caisson formant chaque panneau latéral est légèrement supérieure à l'intervalle existant entre lesdits profilés. Son épaisseur est légèrement inférieure à la largeur de la cavité linéaire de maintien du profilé supérieur, de façon à permettre son insertion en oblique. L'inclinaison et la largeur de la rampe inclinée d'appui 35 permettent le passage au-dessus de l'arête porteuse 14 du profilé inférieur 6 porteur lors de la pose. La hauteur du bandeau d'extrémité 32 en saillie vers le bas de la plaque de face avant 31 est suffisante pour dissimuler totalement le profilé inférieur porteur 6 vers l'extérieur lorsque le panneau est en place.

La conformation des profilés inférieur et supérieur 6 et 7 est également conçue de manière à faciliter la mise en place des panneaux et leur maintien.

Ainsi, la cavité d'emboîtement 21 du profilé supérieur est de hauteur supérieure à celle de la partie insérée de l'extrémité supérieure des panneaux une fois installés, pour pouvoir soulever ceux-ci afin de faire passer la rampe d'accrochage 35 au-dessus de l'arête porteuse 14 lors des opérations d'accrochage et de décrochage.

Egalement, la forme en biseau du profilé inférieur permet un soutien efficace des panneaux, la rampe arrière 13 étant de préférence de pente correspondant à la pente de la rampe d'accrochage des panneaux, et la rampe avant 12 pouvant être, soit symétrique, soit plus inclinée, comme représenté, de façon à diminuer l'angle d'insertion nécessaire.

La face avant 10 joue le rôle d'immobilisation et blocage en mouvement vers l'intérieur de l'extrémité inférieure du panneau, et la rampe arrière 13 joue le rôle d'immobilisation et blocage en mouvement vers l'extérieur, outre son rôle de soutien en prolongement de l'arête 14.

Un panneau latéral d'un autre type est représenté sur la figure 3.

Il s'agit d'un panneau du type plaque ou panneau-plaque 36 dont l'élément plan est réalisé en matière transparente. Dans cet élément, le caisson est remplacé par une plaque 37 de verre minéral ou organique de format rectangulaire et de dimensions quasiment identiques à celles du panneau-caisson, de manière à en constituer un équivalent.

Cette plaque transparente 37 est pourvue à son extrémité supérieure d'un profilé supérieur d'adaptation 38 et à son extrémité inférieure d'un profilé inférieur d'adaptation 39.

Ces profilés d'adaptation ont pour but de rendre les bords transversaux de ce type de panneau, lorsqu'ils en sont pourvus, parfaitement équivalents à ceux des panneaux-caisson.

Le profilé supérieur d'adaptation 38 présente une face supérieure horizontale 40, deux ailes verticales 41 et 42 en saillie vers le bas le long du bord avant, constituant une pince destinée à enserrer l'extrémité supérieure de la plaque 37, et un retour 43 vers le bas, de forme générale bombée, à zone linéaire médiane plane d'appui 44.

Le profilé inférieur d'adaptation 39 présente une gorge longitudinale 45 permettant l'insertion et le blocage de l'extrémité inférieure de la plaque. Le bord longitudinal extérieur de la gorge se poursuit vers le bas selon un bandeau d'extrémité 46 analogue au bandeau 32 des panneaux-caisson.

Le bord longitudinal intérieur de la gorge se poursuit selon une forme, résultant de pliages, identique à celle existant sur le bord inférieur des panneaux-caisson. Il s'agit d'une conformation linéaire d'accrochage sous la forme d'un profil plat 47 analogue à 34, suivie vers l'extérieur d'une rampe linéaire inclinée d'appui 48 analogue à 35 destinée à coopérer avec l'arête porteuse 14 du profilé inférieur porteur 6.

La largeur des profilés 6 et 7 correspond à celle du panneau-caisson.

Le bandeau d'extrémité décrit ci-dessus comme intégré au profilé inférieur d'adaptation peut être réalisé séparément et rapporté, fixé ou soudé sur le chant du profilé inférieur d'adaptation 39 ou directement sur l'extrémité inférieure de la plaque 37.

Il sert à dissimuler le profilé inférieur porteur 6, et à l'appui latéral contre la face avant du profilé inférieur.

Comme indiqué, il peut être formé par pliage dans le bord du profilé inférieur d'adaptation.

L'accrochage de ce panneau 36 du type plaque est réalisé de manière analogue à celui du panneau-caisson par les mouvements suivants : insertion en oblique, montée, basculement vers l'intérieur et abaissement jusqu'à contact d'appui sur le profilé inférieur porteur 6.

L'immobilisation longitudinale des panneaux dans les profilés de maintien et la jonction entre deux panneaux successifs sont assurées par des profilés de jonction latérale.

Comme déjà indiqué, on en distingue de plusieurs sortes. Il existe autant de types de profilés de jonction latérale que de cas de jonctions ou de recouvrements d'une bordure latérale d'extrémité.

Les profilés de jonction latérale convenant à la majorité des cas sont représentés sur les figures de 7 à 16.

La figure 7 représente un profilé de jonction latérale destiné à assurer le raccordement coplanaire entre deux panneaux successifs. Il s'agit d'un profilé de jonction latérale plane 3.

Il est constitué par une platine de face avant 49, de largeur réduite et comportant une structure tubulaire arrière verticale d'accrochage 50 de faible épaisseur. Cette structure d'accrochage sert également d'intercalaire entre les deux panneaux successifs ainsi séparés.

La structure arrière 50 est de section rectangulaire et présente une largeur telle que l'épaisseur de ce profilé de jonction latérale plane correspond à celle des panneaux.

L'extrémité inférieure de la structure comporte à l'arrière un bec d'accrochage 51, de forme similaire au profil d'accrochage existant sur les bords inférieurs des panneaux.

L'extrémité inférieure de la platine de face avant 49 dépasse sous l'extrémité de la structure arrière d'accrochage 50 jouant le rôle de cache d'esthétique, toujours afin de dissimuler le profilé porteur inférieur.

La structure arrière d'accrochage 50 du profilé de jonction latérale plane 3 est soudée en partie longitudinale médiane sur la face arrière de la platine de face avant 49 de façon à ménager de part et d'autre deux ailes latérales de recouvrement 52 et 53.

Ainsi, lorsque le profilé est mis en place entre deux panneaux successifs disposés en prolongation coplanaire, ces ailes latérales de recouvrement 52 et 53 viennent recouvrir les bords latéraux des panneaux adjacents, permettant d'éliminer le jeu transversal résiduel de l'extrémité supérieure de ces panneaux dans la cavité linéaire d'encastrement du profilé supérieur de maintien.

La mise en place d'un profilé de jonction latérale plane 3 entre deux panneaux de paroi latérale est illustrée par la figure 17. Bien entendu, ce profilé de jonction latérale plane peut s'intercaler aussi bien entre deux panneaux-caisson qu'entre deux panneaux de type plaque.

Les figures 8 et 9 représentent des profilés tels que 4 de jonction latérale d'angle droit, respectivement sortant 54 et rentrant 55.

Ils présentent un corps en forme de cornière 56 avec adjonction à l'avant ou à l'arrière d'une structure longitudinale tubulaire d'accrochage 57,58 respectivement dans le cas d'un angle rentrant ou sortant. La section de cette structure tubulaire d'accrochage est par exemple carrée.

La structure d'accrochage 57,58 est analogue à celle du profilé de jonction latérale plane décrite précédemment. Elle comporte ainsi à sa partie inférieure un bec d'accrochage fin 59 ou large 60 pour les réalisations respectivement des figures 8 et 9.

Ces profilés présentent une prolongation inférieure 61 correspondant au bandeau d'extrémité inférieure.

Ces profilés de jonction latérale d'angle 54,55 se placent à l'extrémité d'une suite coplanaire de panneaux au niveau du changement de direction à angle droit. Comme on peut le voir sur les figures, les ailes de la cornière 56 cachent par recouvrement les bords adjacents des panneaux et profilés de maintien.

Les ailes recouvrantes assurent la jonction et l'élimination du jeu avec le panneau de paroi adjacent.

Les figures 10 et 11 représentent des profilés 62,63 de jonction latérale d'angle dans le cas d'angles ouverts, respectivement rentrant et sortant. Chacun est constitué d'une cornière 64 à deux ailes adjacentes en dièdre selon l'angle choisi, et comporte une structure tubulaire arrière d'accrochage spécifique 65 et 66 avec extrémité verticale arrière dédoublée, rentrante 67 ou sortante 68. Son extrémité supérieure d'épaisseur standard permet l'insertion et le blocage dans le profilé de bordure, et son extrémité inférieure comporte une structure en bec d'accrochage double et étroit 69 ou simple et large 70, en saillie vers le bas, pour le soutien et l'accrochage sur le profilé inférieur porteur 6.

Les figures 12 et 13 représentent des profilés tels que 5 de jonction latérale d'angle d'extrémité, ouverts en angle droit sortant 71 et 72, utilisables également dans le cas de panneaux-plaque. Ils présentent un corps en forme de cornière 73 et une structure arrière tubulaire d'accrochage mince 74, rapportée sur l'une ou l'autre des ailes de la cornière.

La structure d'accrochage est ici de section rectangulaire et d'épaisseur standard correspondant à celle des panneaux, avec un bec d'accrochage identique 75 présent à l'extrémité inférieure de la face arrière.

La figure 14 représente un profilé 76 de jonction latérale d'angle droit rentrant avec changement de hauteur de la paroi.

Il comporte un corps 77 de forme générale tubulaire à deux ailes adjacentes 78 et 79 formant angle droit, l'aile 78 étant de hauteur supérieure à l'autre et dépassant à l'extrémité supérieure pour délimiter un épaulement-appui 80.

La structure arrière d'accrochage 81 de forme générale de section rectangulaire, présente un bec d'accrochage inférieur 82 et un chanfrein supérieur 83 à l'arrière de l'aile haute 78 pour l'insertion et le blocage dans le profilé supérieur de maintien 7 correspondant.

Les figures 15 et 16 représentent des profilés complémentaires de jonction latérale d'angle avec maintien d'une plaque 84, par exemple transparente.

Un profilé de jonction d'angle sortant 85 comporte un corps analogue à celui de la figure 13 avec une cornière 86 formant un angle droit sortant et une structure arrière 87. L'intervalle existant entre la structure d'accrochage arrière et l'aile transversale adjacente constitue une pince verticale ouverte vers l'arrière ménageant un espace linéaire de réception dans lequel vient se caler un des bords transversaux de la plaque transparente.

L'autre profilé de jonction d'angle droit 88 est rentrant. Il présente une constitution semblable à celui de la figure 15 comportant une pince verticale 89 ouverte vers l'avant ménageant un espace linéaire de maintien du bord transversal opposé de la plaque et une aile adjacente 90 formant un retour 91 à angle droit.

Les deux profilés complémentaires de jonction ci-dessus 85 et 88 peuvent être de hauteur égale, ou bien différente comme représenté.

Les profilés de jonction latérale d'angle décrits ci-dessus possèdent une fonction de jonction ou de raccord en vue de parfaire l'encastrement des panneaux et de réaliser différentes formes géométriques de paroi latérale de façon à permettre la mise en place des panneaux dans et sur les profilés de maintien en fonction de la forme de ceux-ci. Ils recouvrent, lorsqu'ils sont mis en place, le bord du panneau adjacent d'un côté, ou des deux côtés à la fois selon le cas.

D'autres conformations de panneaux et de profilés de jonction latérale sont envisageables. Ces profilés doivent comporter une structure d'accrochage avec une extrémité supérieure de largeur adéquate pour l'insertion et l'encastrement dans le profilé supérieur de maintien 7, et une extrémité inférieure munie d'un bec ou d'une rampe d'accrochage arrière pour l'appui et le blocage sur le profilé inférieur porteur 6.

Ces profilés de jonction latérale comporteront d'un côté ou des deux côtés une aile de recouvrement du bord transversal du panneau adjacent.

L'ensemble des éléments composant la paroi protectrice et d'autres variantes ou types d'éléments sont de dimensions analogues en ce qui concerne les parties d'accrochage (extrémités supérieure et inférieure des structures d'accrochage).

Leur hauteur est identique. On peut envisager plusieurs hauteurs selon les modèles de convoyeur, ou selon la section du convoyeur le long duquel la paroi protectrice selon l'invention est installée.

Egalement, les panneaux pourront être de longueurs différentes, et les profilés de jonction latérale de formes différentes, de façon à rendre possible la continuité de la paroi, quel que soit le type de parcours du convoyeur, notamment lignes droites courtes ou longues, coudes droits ou ouverts, décalages de toutes sortes....

Des exemples de fractions de paroi latérale formées à l'aide de panneaux et profilés de jonction latérale tels que ceux décrits précédemment sont représentés sur les figures 22 à 24. Afin de montrer la mise en place des éléments dans et sur les profilés de maintien, les fractions de paroi sont représentées vues de l'arrière.

La figure 22 représente une partie de surface latérale montrant un changement de largeur du convoyeur et une modification de hauteur de la paroi latérale.

Les panneaux latéraux et profilés de jonction adaptés de la paroi latérale protectrice selon l'invention permettent ainsi de passer d'une paroi latérale haute décalée vers l'avant 92 à une paroi latérale basse en retrait 93, par une partie transversale intermédiaire de raccordement 94.

Le profilé inférieur porteur 6 est continu au même niveau avec une partie décalée en avant 95, une partie en retrait 96 et une partie intermédiaire transversale 97.

Le profilé supérieur est discontinu présentant une partie décalée en avant 98 comprenant une extrémité transversale intermédiaire 99 et une partie en retrait 100.

On réalise cette paroi intermédiaire à l'aide d'un profilé de jonction d'extrémité tel que 71, de deux panneaux-caisson tels que 29 séparés par un profilé de jonction latérale plane tel que 3, d'un profilé de jonction d'angle sortant tel que 62, d'un panneau-plaque tel que 36 en position transversale, d'un profilé de jonction d'angle rentrant et de raccord en hauteur, symétrique de celui 76 représenté sur la figure 14, puis d'une succession de panneaux.

La figure 23 représente une fraction de paroi latérale avec angle double sortant, d'une valeur par exemple de 135°, dont la succession constitue un coude à angle droit.

L'ensemble se divise en trois parties de paroi de même hauteur, respectivement droite 101, oblique 102 et perpendiculaire 103. Les profilés supérieur de maintien 7 et inférieur porteur 6 sont également continus en trois parties.

Des panneaux-caisson tels que 2 sont séparés par des profilés d'angle sortant tels que 62.

La figure 24 est une vue analogue par symétrie à la figure 22, mais avec une partie transversale transparente 104 entre une partie décalée en avant 105 et une partie en retrait 106.

Les profilés inférieur porteur 6 et supérieur de maintien 7 sont réalisés en deux parties non continues.

On réalise également la partie haute de paroi avec un profilé de jonction d'extrémité tels que 72, deux panneaux tels que 2 séparés par un profilé de jonction latérale plane tel que 3, et la partie basse avec une succession de panneaux.

Les raccords d'angles sont réalisés avec deux profilés complémentaires de jonction d'adaptation tels que ceux 85,88 décrits en référence aux figures 15 et 16.

Entre ces deux profilés prend place une plaque transparente 107 pouvant être interrompue, ou se prolonger au-dessus de la paroi latérale comme suggéré sur ces figures.

De façon générale, comme mentionné plus haut, les profilés de maintien peuvent être fixés de manière simple et rapide sur une structure porteuse du type ossature 108 comme celle représentée sur la figure 19. L'ossature est constituée par exemple de cadres porteurs transversaux tels que 109 disposés de chaque côté, et dont les montants extérieurs, tels que 110, comprennent des extrémités en saillie, vers le haut 111 et vers le bas 112, pour la fixation des profilés de maintien. Ces cadres porteurs sont montés sur le corps 113 du convoyeur ou sur les piètements le supportant, par exemple les montants de soutien ou les piètements tels que 114 ou 115 de la bande de transfert.

Les profilés 6 et 7 sont montés sur les montants extérieurs des cadres porteurs par l'intermédiaire de vis telles que 116 traversant la face arrière des profilés inférieur porteur 6 ou supérieur de maintien 7 et venant s'engager, en vue du blocage, dans les contre-pièces de fixation 17 et 23 faisant office d'écrou(s) mobiles le long desdits profilés.

Ces contre-pièces 17 ou 23 spécifiques pour chaque profilé, représentées sur la figure 20 pour le profilé supérieur et sur la figure 21 pour le profilé inférieur, sont insérées dans la gorge arrière en gouttière respectivement 16,22 de l'un ou l'autre profilé, le long de laquelle ladite contre-pièce peut coulisser pour venir se placer en position de façon à présenter un ou plusieurs trous taraudés tels que 117 de diamètre adapté aux vis 116 de fixation, face aux perçages dans la face arrière du profilé au droit des éléments de fixation de l'ossature.

La mobilité de ces contre-pièces de fixation le long des gouttières arrière des profilés permet ainsi de réaliser la fixation en un endroit quelconque le long de l'un ou de l'autre profilé.

Pour un meilleur appui et collage et une meilleure rigidité, ces contre-pièces seront planes, de forme générale rectangulaire, profilées selon la forme de cassure d'angle de la face latérale adjacente du profilé.

Une vue générale d'un tronçon de convoyeur muni d'une enveloppe protectrice intégrant la paroi latérale selon l'invention est représentée sur la figure 43.

Ladite paroi est constituée de diverses parties successives hautes ou basses utilisant différents éléments, panneaux-caisson ou plaque et profilés de jonction.

La protection inférieure 24 à laquelle la paroi latérale est associée est constituée de plaques telles que 118,119 légèrement inclinées vers un profilé intérieur central de récupération 120. De chaque côté, la bordure recourbée de ces plaques est insérée dans la fente longitudinale 15 du profilé inférieur et montée à pivotement charnière sur son bord recourbé 9.

La protection supérieure 25 est constituée, selon la partie du convoyeur concernée, de panneaux de recouvrement tels que 121 en appui-blocage sur le profilé supérieur du type à face supérieure plane, de trappes telles que 122 articulées à pivotement, bloquées en position fermée contre la saillie 26 que présente ce type de profilé supérieur, ou de capots doubles tels que 123,124 coulissant l'un dans l'autre le long des rails de guidage selon l'autre type de conformation du profilé supérieur, ou fixes tels que 125, droits ou coudés.

La paroi supérieure de protection et d'isolation 25 permet de constituer, avec la paroi latérale et la fermeture inférieure du convoyeur, une enveloppe entièrement fermée.

De manière préférée, la couverture supérieure 25 est réalisée sous la forme d'un recouvrement en forme de toit à deux pentes par exemple symétriques, de façon à former un caisson de protection. Elle peut également être constituée sur certains tronçons d'une protection réalisée avec les panneaux incurvés en tunnel ou capots 123,124 coulissant l'un dans l'autre ou fixes 125, droits ou coudés.

On décrira ci-après la paroi constituant un côté seulement de la couverture supérieure 25.

En se référant aux figures de 25 à 33, une section courante installée sur un convoyeur de la protection supérieure 25 selon l'invention comprend une succession de panneaux supérieurs tels que 121. Ces panneaux plans sont disposés successivement en position horizontale ou légèrement inclinée vers l'avant entre deux profilés de maintien horizontaux longitudinaux, respectivement avant de soutien 126 et arrière d'emboîtement 127.

Les panneaux plans 121 peuvent être remplacés comme représenté sur la figure 43 par des trappes 122.

Les panneaux supérieurs plans 121 sont séparés par des profilés de jonction : de jonction intermédiaire plane tel que 128 et de jonction d'extrémité tel que 129, etc...

Ces profilés de jonction permettent d'assurer l'emboîtement des panneaux supérieurs et de parfaire l'aspect esthétique de la paroi de fermeture.

Comme mentionné, le profilé arrière est situé légèrement plus haut que le profilé avant, de manière à obtenir une paroi de fermeture en pente douce vers l'avant. Cette disposition permet de réaliser un recouvrement en forme de toit à deux pentes, en disposant une paroi similaire symétriquement de l'autre côté du convoyeur. Les profilés arrière sont alors réunis, voire intégrés, et forment l'arête du toit.

Bien entendu, la paroi pourra également être plus ou moins inclinée, parfaitement horizontale, voire inclinée dans l'autre sens.

Le profilé avant de soutien 126 est de section générale rectangulaire, droite ou avec saillie comme le profilé supérieur de maintien 7 qu'il peut remplacer.

Il peut être constitué de manière avantageuse par le profilé de bordure supérieure de la paroi latérale de protection du convoyeur.

Il présente une face supérieure 130 horizontale servant de support pour la succession des panneaux, deux faces latérales avant 131 et arrière 132 verticales et une face inférieure 133.

Il ne comporte pas d'ouverture. Il peut être en outre fermé à ses extrémités par des faces transversales d'extrémité.

Le profilé arrière 127 est de forme générale rectangulaire. Il est légèrement incliné vers l'avant en fonction de la pente de la paroi supérieure.

Il comporte une cavité linéaire réceptrice 134 sur la totalité de sa face latérale avant de façon à former un logement longitudinal pour l'engagement et l'emboîtement de blocage de l'extrémité arrière des panneaux amovibles, l'extrémité avant de ces éléments reposant sur le profilé avant.

La cavité linéaire réceptrice 134 est délimitée par un bord supérieur 135 formé par la face supérieure 136 du profilé 127 et un bord inférieur 137 formé par la face inférieure 138 du profilé. Ce bord inférieur 137 est légèrement décalé vers le haut, de manière à ménager à l'intérieur de la cavité linéaire 134 de réception un dégagement inférieur 139 pour l'engagement en oblique des panneaux de parois dans le logement.

Les panneaux 121 de paroi sont mis en place par engagement de leur extrémité arrière 140 dans ce profilé arrière, leur extrémité avant 141 reposant en appui sur le profilé avant.

On décrira tout d'abord un des panneaux supérieurs 121 courants de type panneau-caisson isolant et insonorisant en référence aux figures 26 et 27.

Ce panneau est constitué d'une plaque de face supérieure 142 ou plaque extérieure de largeur correspondant à l'intervalle entre les profilés de soutien, et de longueur variable, solidaire d'une carrosserie de protection en forme de caisson 143 de forme générale parallélépipédique, ce caisson pouvant contenir un matériau isolant et insonorisant 144, par exemple une mousse.

Le caisson est délimité au-dessus par la plaque supérieure 142, en-dessous par une plaque inférieure 145 de forme générale rectangulaire, parallèle à la plaque extérieure, percée de trous tels que 146. L'épaisseur du caisson, notamment au niveau de la bordure d'extrémité arrière 140 du panneau, correspond, au jeu près, à la distance entre les bords supérieur 135 et inférieur 137 de la cavité linéaire réceptrice 134 du profilé arrière 4.

Le panneau présente en sous-face de sa bordure d'extrémité avant 141 un renfoncement longitudinal 147 de faible profondeur, de fond 148 plat légèrement incliné vers l'avant par rapport au plan des panneaux extérieur et intérieur, et de largeur correspondant à celle du profilé de soutien avant 126, délimité par un épaulement arrière 149 longitudinal de blocage définissant un profil d'appui-blocage 150 en encoche avec les faces supérieure 130 et latérale arrière 132 du profilé avant de soutien 126.

Le panneau comporte en outre un volet ou bandeau 151 vertical rectangulaire d'extrémité avant dépassant vers le bas. Ce bandeau vient se plaquer contre la face latérale avant 131 du profilé avant 126 lorsque le panneau est en place, de façon à dissimuler ledit profilé.

La mise en place du panneau s'effectue comme décrit ci-dessous (en référence aux figures 28 à 30).

On insère l'extrémité arrière 140 du panneau dans l'ouverture d'engagement de la cavité linéaire réceptrice 134 du profilé de maintien arrière 127, le panneau se présentant légèrement de biais.

Lorsque cette extrémité arrive sur le fond de la cavité linéaire réceptrice du profilé arrière, le profil d'appui-blocage 150 vient en position au-dessus du profilé avant 126 et par un simple pivotement de petite amplitude, ce profil d'appui vient s'immobiliser en appui sur le profilé avant.

L'épaulement 149 de bordure joue un rôle de butée empêchant le panneau de glisser transversalement vers l'avant. Le panneau est également immobilisé transversalement vers l'arrière par le bandeau d'extrémité avant 151.

En outre, le bandeau d'extrémité avant masque, dans cette position, le profilé avant de soutien 126 pour une meilleure esthétique.

Le panneau de paroi est bloqué transversalement mais non longitudinalement, et il peut être mis en place simplement en le faisant glisser le long des profilés de soutien.

Bien entendu, d'autres types de panneaux sont envisageables, par exemple panneaux comportant une surface transparente au lieu d'un caisson insonorisant, etc...

Cependant, chaque panneau présente une bordure d'extrémité arrière d'engagement-emboîtement dans la cavité linéaire réceptrice 134 du profilé arrière d'épaisseur correspondant, au jeu près, à la hauteur de l'ouverture d'engagement du profilé arrière, et une bordure d'extrémité avant définissant un profil d'appui avec un épaulement ou autre en saillie de blocage transversal, complémentaire de la forme de section du profilé avant.

La figure 31 représente un des profilés de jonction, du type profilé de jonction intermédiaire plane 128 entre deux panneaux.

Il est constitué d'une platine supérieure 152 étroite. Cette platine comporte en sous-face 153 une structure tubulaire 154 de renforcement et de montage de section rectangulaire.

L'ensemble structure 154 et platine supérieure 152 présente l'épaisseur standard d'engagement dans la cavité réceptrice du profilé arrière, notamment en bordure d'extrémité arrière 155 de ladite structure 154.

En bordure d'extrémité avant 156, le profilé comporte une découpe 157 de profil similaire au renfoncement en encoche du panneau, définissant un profil d'appui 158 avec un épaulement formant un ergot 159 de blocage.

Le panneau comporte un retour 160 d'extrémité avant masquant le profilé de soutien avant.

De manière spécifique, la platine 152 dépasse latéralement de chaque côté de la structure tubulaire 154 de façon à former deux ailes 161,162 de recouvrement. Lorsque le panneau intermédiaire est en place entre deux panneaux, ces ailes latérales recouvrent de chaque côté les bords adjacents desdits panneaux.

La présence de ces ailes de recouvrement assure l'emboîtement des panneaux dans le profilé arrière, ainsi que la continuité esthétique de l'ensemble de la paroi supérieure.

Le retour 160 vertical d'extrémité avant est de même largeur que la plaque supérieure et recouvre donc également latéralement, respectivement de chaque côté, les bandeaux d'extrémité avant des panneaux adjacents.

La figure 32 représente un autre profilé de jonction du type profilé de jonction d'extrémité 129.

Ce profilé est formé de manière analogue au précédent, d'une platine 163 de face supérieure avec un retour 164 vertical d'extrémité avant et d'une structure tubulaire 165 de renforcement et de montage fixée en sous-face 166 de la platine 163, comprenant un profil d'appui-blocage 167 et un ergot 168 de blocage transversal. Cependant, la platine comporte en outre le long d'un côté de la platine 163 un bandeau d'extrémité 169 pour cacher le profil de la fermeture à son extrémité.

Ce bandeau 169 forme un angle droit avec la platine 163 et présente une découpe 170 correspondant à la forme de la structure tubulaire 165, en vue de s'adapter à la forme du profilé de soutien avant lors de la dépose.

L'autre côté de la platine 164 supérieure comporte une aile 171 de recouvrement pour le bord du panneau adjacent.

Bien entendu, le bandeau 169 peut être disposé à droite vu de l'avant, comme représenté, ou bien à gauche, afin de le mettre en place, soit à l'une, soit à l'autre extrémité de la paroi de fermeture.

D'autres types de composants profilés de jonction sont bien entendu également envisageables, par exemple pour s'adapter à une modification de la largeur de la paroi, ou de sa hauteur.

Comme mentionné, ces profilés de jonction sont destinés à être disposés entre ou contre les panneaux, ou imbriqués dans ceux-ci, en vue de parfaire la cohésion de l'ensemble en éliminant le jeu résiduel, grâce à la présence d'ailes de recouvrement dépassant latéralement et recouvrant le bord adjacent desdits panneaux.

Ces ailes de recouvrement peuvent être constituées très simplement par les bords en saillie de la platine de face supérieure, comme représenté.

Au niveau du logement d'emboîtement du profilé arrière, chaque aile latérale de la platine de face supérieure du profilé de jonction s'intercale entre la bordure du panneau adjacent et le bord supérieur de l'ouverture, de façon à éliminer le jeu résiduel d'engagement de l'élément de panneau en plaquant la bordure d'extrémité du panneau contre le bord inférieur.

Les profilés de jonction permettent également de parfaire l'aspect extérieur de la paroi en dissimulant les intervalles de jonction entre les panneaux.

L'invention a été décrite dans une réalisation avec deux profilés arrière et avant légèrement décalés en hauteur de façon à donner une légère pente à la paroi de protection.

Bien entendu, comme on l'a mentionné, d'autres dispositions ou combinaisons de profilés sont envisageables, notamment deux profilés disposés à la même hauteur pour une paroi horizontale, ou deux profilés bas latéraux et un profilé double de faîte pour une paroi supérieure à deux pentes.

On pourra encore remplacer le profilé double central par un profilé central unique comportant deux ouvertures d'engagement-emboîtement longitudinales, symétriquement de chaque côté.

La figure 43 montre l'exemple de réalisation de l'enveloppe supérieure d'une unité de transfert selon une réalisation composite comprenant la couverture supérieure 25 en caisson à chacune de ses extrémités sous la forme d'un caisson composé des panneaux 121 et des trappes ou volets d'observation 122.

Cette couverture supérieure met également en oeuvre des éléments en tunnel fixes 125 ou coulissants 123,124, en plus des volets articulés d'observation 122 et des panneaux 121, séparés par les profilés de jonction 128,129.

Les profilés de soutien sont montés sur une structure porteuse fixée par exemple sur les piétements tels que 114 et 115 soutenant le corps du convoyeur.

Le caisson d'isolation comprend en outre une protection latérale également formée des panneaux amovibles 2 séparés par les profilés de jonction 3 ainsi que la protection inférieure comprenant les plaques inclinées 118 et 119 vers le profilé central 120 de récupération.

Cette protection inférieure sera décrite ci-après.

La couverture inférieure 24 d'isolation et de récupération formant carénage assure l'étanchéité inférieure du convoyeur par montage d'une succession composée des éléments plans amovibles de fermeture 118 et 119 disposés entre le profilé central de récupération 120 et des profilés longitudinaux porteurs, les éléments de fermeture étant montés par simple accrochage-articulation le long d'un bord longitudinal et immobilisation par encliquetage sur le bord opposé.

Cette couverture assure la protection d'isolation et de récupération inférieure 24 du convoyeur, représentée sur la figure 34, est montée sur un bâti dont seuls deux montants de fixation 172 et 173 et une traverse de liaison 174 sont représentés.

La protection comprend une structure fixe porteuse 175 et les éléments plans amovibles de fermeture du type volets pivotants 118 et 119.

La structure porteuse se compose de deux profilés latéraux longitudinaux d'accrochage 176 et 177 et du profilé central de récupération 120. Les profilés latéraux longitudinaux d'accrochage 176 et 177 seront de préférence constitués par les profilés inférieurs porteurs en regard tels que 6 d'une paroi de protection latérale.

Les profilés latéraux longitudinaux d'accrochage 176 et 177 sont conformés par exemple par pliage à partir d'une tôle et présentent une section tubulaire avec une partie inférieure 178 en forme de U complétée en partie supérieure 179 par une ligne en pointe formant une arête longitudinale porteuse 180 au sommet du profilé.

Chaque profilé latéral comporte une ouverture en fente longitudinale, respectivement 181,182, dans sa face latérale en regard du profilé central.

Le bord supérieur 183 de cette ouverture est conformé en gouttière 184 pour le coulissement d'une pièce de fixation sur le bâti.

Le bord inférieur 185 est recourbé sur lui-même vers l'intérieur de façon à former un retour 186 d'accrochage et d'articulation-charnière à profil transversal arrondi, orienté vers le bas.

Le profilé central de récupération 120 présente un profil en gouttière de forme générale en U évasé. Ses bords longitudinaux sont repliés à l'horizontale vers l'extérieur, formant de chaque côté un méplat 187 de faible largeur, puis recourbés chacun sur lui-même en enroulement vers l'intérieur de façon à former un retour 188 d'accrochage-articulation similaire à celui des profilés longitudinaux disposés en regard.

Le profilé central 120 est situé en position médiane longitudinale entre les deux profilés latéraux longitudinaux 176,177, et légèrement en-dessous.

Les plans amovibles de fermeture 118 et 119 sont disposés de part et d'autre du profilé central de récupération 120, entre celui-ci et chaque profilé latéral longitudinal. Ainsi, ces plans forment une surface inclinée à double pente collectant les liquides et les débris qui sont entraînés vers le profilé central de récupération 120.

On a représenté à titre d'exemple sur les figures 35 et 36 un plan de fermeture sous la forme d'une plaque de protection de type unique 189 constituant une desdites plaques latérales.

Chaque plaque 189 est de format rectangulaire. Sa largeur correspond à l'écartement entre le profilé central 120 et chacun des profilés latéraux 176 et 177.

La plaque de protection est représentée à titre d'exemple sous forme carrée.

Bien entendu, on pourra utiliser, pour la protection, des plaques de longueurs différentes.

Un des bords longitudinaux 190 de chaque plaque comporte une aile 191 en saillie perpendiculaire vers le bas, celle-ci étant recourbée sur elle-même vers l'intérieur le long de son extrémité inférieure, de façon à former un retour 192 d'accrochage-articulation en charnière, forme complémentaire à celle existant sur les profilés d'accrochage 176 et 177.

L'aile et son retour longitudinal d'extrémité 192 peuvent être constitués par une platine rapportée sur un des bords de la plaque. L'extrémité supérieure du volet est repliée à angle droit et immobilisée contre le bord longitudinal 190 de la plaque par une contre-plaque 193 de bordure, fixée par exemple au moyen de rivets ou autres (figure 36).

Le bord longitudinal opposé 194 de la plaque comporte un moyen d'appui et d'immobilisation, sur un des profilés de maintien, par exemple un dispositif à encliquetage du type à pêne formant un loquet 195.

Le loquet 195 est également solidarisé à la sous-face de la plaque par vissage ou rivetage, grâce à un renfort sous la forme d'une contre-plaque 196 de fixation.

Le loquet 195 est conformé en un coulisseau 197 dans lequel se déplace un doigt rétractable 198 rectangulaire transversal muni, à son extrémité non opérante 199 située vers l'intérieur de la plaque, d'une poignée d'actionnement 200.

Ce doigt est mobile entre une position rétractée dans le coulisseau, et une position sortie, dans laquelle l'extrémité opérante 201 du doigt 198 dépasse légèrement du bord de la plaque.

Le montage de la plaque s'effectue très simplement en insérant le retour d'accrochage 192 dans le retour longitudinal 188 complémentaire d'un côté du profilé central. Le retour de la plaque vient en prise avec le retour inférieur d'articulation-accrochage dudit profilé central.

La plaque est alors mobile en pivotement autour de cette articulation formant une charnière 202.

On soulève la plaque jusqu'à amener le bord opposé portant le loquet 195 au niveau de l'ouverture en fente longitudinale du profilé latéral correspondant, puis on pousse le doigt mobile dudit loquet.

On peut ensuite lâcher la plaque, le doigt sorti reposant sur le retour d'accrochage-articulation formant le bord inférieur de l'ouverture longitudinale du profilé latéral.

On pourra indifféremment monter les plaques latérales de telle sorte qu'elles soient articulées, soit des deux côtés sur le profilé central (figure 37), comme décrit ci-dessus, soit des deux cotés sur les profilés latéraux longitudinaux (figure 38), ou bien encore d'un côté sur le profilé central, de l'autre sur le profilé longitudinal (figure 39).

Les figures 40, 41 et 42 illustrent l'ouverture de la protection en gouttière, par exemple pour une intervention en un endroit quelconque de la bande de transfert. Les flèches de plus grosse épaisseur montrent le sens du mouvement.

Le montage des plaques correspond à la variante représentée sur les figures 34 et 37.

On tire les loquets 195, et on abaisse les plaques 189 qui pivotent autour de leur articulation de bordure en charnière 202.

Les plaques pendent ainsi à l'état ouvert, accrochées aux retours d'accrochage-articulation du profilé central, en position quasi-verticale.

On peut alors très simplement enlever chaque plaque en décalant légèrement son retour d'accrochage 192 vers l'intérieur de façon à le décrocher du retour d'accrochage 188 complémentaire du profilé central.

Bien entendu, les manoeuvres seraient absolument analogues dans le cas de plaques articulées sur les profilés latéraux.

Diverses variantes de conformation des profilés de la structure porteuse, ainsi que des éléments de couverture, sont envisageables.

Par exemple, les plaques pourront être articulées sur les retours supérieurs d'accrochage des profilés longitudinaux porteurs par un volet transversal de bordure en saillie vers le haut.

Les loquets pourront être remplacés par tout autre moyen d'accrochage avec appui et immobilisation.

Egalement, les plaques pourront être garnies en sous-face d'un matériau isolant.

La fermeture à deux pentes avec profilé central de récupération pourra être remplacée par une couverture à pente unique, avec profilé unique longitudinal de récupération.

On pourra prévoir le profilé de récupération légèrement en pente vers un conduit d'évacuation à l'extrémité la plus basse.

D'autres variantes simples ainsi que diverses modifications évidentes entrent dans le cadre de la présente invention.

Les panneaux 2 de surface latérale 1 formant les parois latérales de l'enveloppe de protection reposent sur l'arête supérieure 180 des profilés latéraux 176 et 177.

On obtient ainsi en partie inférieure une protection continue et efficace.

On peut également envisager d'autres formes de protection.

Comme il ressort de la description, les profilés inférieurs porteurs 6,176,177 et supérieurs de maintien 7,126 constituent une structure de base permettant de réaliser de multiples formes et types de parois, avec panneaux-caisson ou panneaux-plaque transparents, ouvertures de contrôle, d'inspection ou d'entretien, insonorisation, etc.

## Revendications

1. Enveloppe de protection et d'isolation pour unité de transfert du type convoyeur ou autre constituée d'une succession de panneaux, caractérisée en ce que la paroi latérale est formée de panneaux latéraux (2) montés de façon amovible entre un profilé longitudinal inférieur porteur (6,176,177) et un profilé longitudinal supérieur de maintien (7,126) et séparés latéralement par des profilés de jonction latérale (3,4,5) également amovibles, ces panneaux (2) et profilés de jonction étant juxtaposés et montés sur les profilés longitudinaux (6,7,126,176,177) par simple emboîtement supérieur et appui inférieur avec immobilisation transversale en vue de former une paroi latérale (1) complète adaptable à toutes les formes de courbe ou de trajet d'un convoyeur, en ce que la couverture supérieure est constituée de deux profilés longitudinaux porteurs avant de soutien (7,126) et arrière d'emboîtement (127) et d'une succession de capots (123,124,125) en tunnel, de trappes (122) et/ou de panneaux supérieurs amovibles tels que (121) juxtaposés au moyen de profilés de jonction (128,129) et montés par simple emboîtement dans une cavité linéaire longitudinale de réception et d'emboîtement (134) que présente le profilé porteur arrière d'emboîtement (127), et en ce que la couverture inférieure est constituée des deux profilés longitudinaux inférieurs porteurs (6,176,177) disposés côte à côte correspondant à chacune des parois latérales opposées, d'un profilé central de récupération (120) en forme de gouttière et d'un ensemble de plaques de fermeture (118,119 ou 189) disposées inclinées de chaque côté entre le profilé central (120) et chaque profilé longitudinal (6,176,177) formant ainsi un plan incliné double, lesdites plaques de fermeture (118,119 ou 189) étant maintenues par simple accrochage-articulation et appui-immobilisation sur chaque profilé longitudinal et sur les bords du profilé central (120).

2. Enveloppe selon la revendication 1, caractérisée en ce que le profilé supérieur de maintien (7) est conformé en cavité linéaire d'emboîtement (21) ouverte vers le bas pour l'introduction de l'extrémité supérieure des panneaux (2) et profilés de jonction latérale en vue de leur maintien supérieur, et présente sur sa face supérieure (20) des structures linéaires saillie (26) ou rails (27 et 28) coopérant avec les extrémités des panneaux et capots supérieurs.

3. Enveloppe selon la revendication 1, caractérisée en ce que le profilé inférieur porteur (6) présente en partie supérieure une arête porteuse (14), ledit profilé comportant de chaque côté une face latérale plane (10,11) en vue du maintien inférieur par appui avec immobilisation transversale des panneaux (2) et des profilés de jonction latérale.

4. Enveloppe selon l'une des revendications précédentes, caractérisée en ce que les panneaux (2) et les profilés de jonction latérale comprennent un bord d'extrémité supérieure d'épaisseur correspondant au jeu près à la largeur de la cavité linéaire d'emboîtement (21) du profilé supérieur de maintien (7).

5. Enveloppe selon l'une des revendications 3 ou 4, caractérisée en ce que les panneaux (2) et profilés de jonction latérale présentent, le long de leur bord inférieur, une conformation d'appui-immobilisation de profil coopérant avec celui de l'arête porteuse (14) du profilé inférieur (6) et de ses formes adjacentes.

6. Enveloppe selon la revendication 1, caractérisée en ce que les panneaux (2, 36) sont conformés selon un caisson renfermant un complexe isolant et insonorisant dans une enveloppe perforée sur sa face arrière ou selon une plaque obscure ou transparente.

7. Enveloppe selon la revendication 6, caractérisée en ce que les bords supérieur et inférieur de la plaque des panneaux-plaques (36) sont garnis d'un profilé d'adaptation supérieur (38) et inférieur (39) et d'un bandeau inférieur d'extrémité (46) rendant ce panneau équivalent en accrochage-maintien à un panneau-caisson.

8. Enveloppe selon la revendication 7, caractérisée en ce que le profilé supérieur d'adaptation (38) présente une face supérieure horizontale (40), deux ailes verticales (41 et 42) en saillie vers le bas le long du bord avant et serrant l'extrémité supérieure de la plaque, et un retour (43) vers le bas de forme bombée à zone linéaire médiane plane d'appui (44).

9. Enveloppe selon la revendication 7, caractérisée en ce que le profilé inférieur d'adaptation (39) présente une gorge longitudinale (45) pour le maintien du bord inférieur de la plaque, le bord longitudinal extérieur de la gorge se poursuit vers le bas selon le bandeau inférieur d'extrémité (46) et le bord longitudinal intérieur se poursuit selon un profil plat (47) suivi d'une rampe inclinée d'appui (48) permettant son montage-immobilisation sur le profilé inférieur porteur (6).

10. Enveloppe selon la revendication 1, caractérisée en ce que les profilés de jonction latérale comprennent une platine de face avant présentant des ailes latérales avant recouvrant les bords latéraux des panneaux adjacents, et en ce que la platine de face avant des profilés de jonction latérale est renforcée l'arrière par une structure tubulaire d'accrochage terminée en partie inférieure par un bec d'accrochage.

11. Enveloppe selon la revendication 10, caractérisée en ce que les ailes formant la platine de face avant sont constituées d'un seul plan.

12. Enveloppe selon les revendications 10 et 11, caractérisée en ce que la platine plane présente une structure tubulaire d'accrochage (50) de section rectangulaire, d'épaisseur transversale correspondant à celle des panneaux, terminée vers le bas par un bec d'accrochage (51).

13. Enveloppe selon les revendications 10 et 11, caractérisée en ce que la platine de face avant forme un dièdre rentrant ou sortant et présente une structure tubulaire arrière (57 ou 58) à section carrée terminée vers le bas par un bec d'accrochage respectivement fin (59) ou large (60) pour former des profilés de jonction latérale d'angle droit sortant (54) ou rentrant (55) respectivement.

14. Enveloppe selon les revendications 10 et 11, caractérisée en ce que la platine formant un angle ouvert rentrant ou sortant présente une structure tubulaire arrière (65 ou 66) d'épaisseur correspondant à celle des panneaux, à extrémité verticale arrière dédoublée rentrante (67) ou sortante (68) terminée vers le bas par un bec d'accrochage double et étroit (69) ou simple et large (70) respectivement.

15. Enveloppe selon les revendications 10 et 11, caractérisée en ce que la platine présente une structure arrière tubulaire (74) de section rectangulaire mince, d'épaisseur correspondant à celle des panneaux, terminée vers le bas par un bec d'accrochage (75), la structure étant rapportée sur l'une ou l'autre aile de la platine de face avant.

16. Enveloppe selon la revendication 10, caractérisée en ce que les profilés de jonction latérale présentent deux ailes adjacentes (78 et 79) formant un angle droit, l'une étant de hauteur supérieure à l'autre et dépassant à l'extrémité supérieure pour délimiter un épaulement-appui (80), et en ce que les profilés de jonction présentent une structure arrière tubulaire d'accrochage (81) de section rectangulaire terminée vers le haut par un chanfrein supérieur (83) à l'arrière de l'aile haute et vers le bas par un bec d'accrochage inférieur (82).

17. Enveloppe selon la revendication 10, caractérisée en ce que la platine de face avant présente une pince verticale ouverte vers l'arrière ou vers l'avant pour la réception et le calage d'une plaque transversale (84).

18. Enveloppe selon la revendication 1, caractérisée en ce que l'un au moins des profilés inférieurs porteurs (6) et supérieurs de maintien (7) présente des conformations d'accrochage pour les éléments complémentaires constituant respectivement la fermeture inférieure (24) ou la protection supérieure (25).

19. Enveloppe selon la revendication 1, caractérisée en ce que la couverture supérieure (25) comporte des capots conformés en tunnel, soit fixes (125), soit doubles et coulissants (123,124).

20. Enveloppe selon la revendication 1, caractérisée en ce que chaque panneau supérieur (121) présente un bandeau d'extrémité avant (151) en saillie verticale vers le bas, ledit bandeau venant en position de blocage contre la face avant (131) du profilé avant (126).

21. Enveloppe selon la revendication 1, caractérisée en ce que les profilés de jonction (128,129) sont formés d'une platine (152,163) présentant en sous-face une structure tubulaire (154,165) de renforcement et de montage, cette structure étant, au niveau de son extrémité arrière, d'épaisseur correspondant à la hauteur de la cavité de réception (134) du profilé arrière d'emboîtement (127), et comportant, au niveau de son extrémité avant, un profil d'appui-blocage (158,167) analogue à celui des panneaux supérieurs (121) et, au niveau de son extrémité opposée, un retour vertical (160,164), en ce que les profilés de jonction (128,129) présentent d'un côté au moins une aile de recouvrement (161,162) dépassant latéralement et recouvrant la bordure latérale du panneau adjacent, en vue de parfaire l'emboîtement de l'ensemble et en ce que les profilés d'extrémité (129) comprennent un bandeau d'extrémité (169) disposé à angle droit le long d'un des côtés de la platine (152).

22. Enveloppe selon la revendication 1, caractérisée en ce que qu'au moins d'un côté du profilé central (120), les plaques latérales (118,119 ou 189) sont articulées sur le profilé latéral porteur inférieur (6 ou 176,177).

23. Enveloppe selon la revendication 1 caractérisée en ce qu'au moins d'un côté du profilé central (120), les plaques latérales (118,119 ou 189) sont articulées sur le profilé central (120).

24. Enveloppe selon la revendication 1 caractérisée en ce que les plaques (118,119 ou 189) comportent le long d'un bord longitudinal (190) une aile transversale (191) de bordure rapportée à extrémité recourbée en retour (192) d'accrochage-articulation, le profilé central (120) ou les profilés longitudinaux (6 ou 176,177) comportant un retour (186,188) d'accrochage-articulation recourbé de forme complémentaire et en ce que les plaques (118,119,189) sont déposées sur au moins un profilé porteur (6 ou 176,177) par l'intermédiaire d'un moyen d'appui et d'immobilisation dépassant du bord longitudinal opposé (194), et en ce que le moyen d'appui et d'immobilisation est un ou plusieurs loquets (195) comprenant chacun un doigt rétractable (198) coulissant entre une position rétractée derrière la bordure d'extrémité (194) et une position sortie, dans laquelle l'extrémité opérante (201) du doigt (198) se trouve en saillie devant la bordure d'extrémité (194).

## Claims

1. Protective and insulating cover for a conveyor unit of the conveyor belt or other type formed of a series of panels, characterised in that the lateral wall is formed of lateral panels (2) mounted in a removable manner between a bearing lower longitudinal profile section (6, 176, 177) and a retaining upper longitudinal profile section (7, 126), and separated laterally by lateral connecting profile sections (3, 4, 5) which are likewise removable, these panels (2) and connecting profile sections being juxtaposed and mounted on the longitudinal profile sections (6, 7, 126, 176, 177) by simple encasement at the top and bearing at the base with transverse immobilisation for the purpose of forming a complete lateral wall (1) which is adaptable to any curved or straight path of a conveyor belt; in that the upper cover is formed of two bearing longitudinal profile sections, one in front for support (7, 126) and one behind for encasement (127) and of a series of hoods (123, 124, 125) arranged to form a tunnel, flaps (122) and/or removable upper panels such as (121) juxtaposed by means of connecting profile sections (128, 129) and mounted, by simple encasement, in an accommodating and encasing longitudinal linear cavity (134) which the encasing rear bearing profile section (127) comprises; and in that the lower cover is formed of two bearing lower longitudinal profile sections (6,176,177) arranged side by side, corresponding to each of the opposite lateral walls, of a collecting central profile section (120) in the form of a gutter and of an assembly of closing plates (118,199 or 189) arranged in a slanting manner on each side between the central profile section (120) and each longitudinal profile section (6,176,177) thus forming a double slanting plane, said closing plates (118, 119 and 189) being retained by simple hooking-articulation and bearing-immobilisation on each longitudinal profile section and on the edges of the central profile section (120).

2. Cover according to Claim 1, characterised in that the retaining upper profile section (7) is formed as an encasing linear cavity (21) which is open at the base for the upper end of the panels (2) and lateral connecting profile sections to be introduced for the purpose of retention thereof at the top, and comprises, on its upper face (20), projecting linear structures (26) or rails (27 and 28) cooperating with the ends of the panels and the upper hoods.

3. Cover according to Claim 1, characterised in that the bearing lower profile section (6) has, in the upper part, a bearing stop (14), said profile section having, at each side, a plane lateral face (10,11) for the purpose of retention at the base, by means of bearing with transverse immobilisation, of the panels (2) and the lateral connecting profile sections.

4. Cover according to one of the preceding Claims, characterised in that the panels (2) and the lateral connecting profile sections have an upper end edge of a thickness corresponding, except for play, to the width of the linear encasement cavity (21) of the retaining upper profile section (7).

5. Cover according to one of Claims 3 or 4, characterised in that the panels (2) and the lateral connecting profile sections have, along their lower edge, a bearing-immobilisation profile shape cooperating with that of the bearing stop (14) of the lower profile section (6) and its adjacent shapes.

6. Cover according to Claim 1, characterised in that the panels (2,36) are shaped like a box containing an insulating and sound-absorbing compound in a cover which is perforated on its rear face or like an opaque or transparent plate.

7. Cover according to Claim 6, characterized in that the upper and lower edges of the plate of the panel plates (36) are provided with an upper (38) and a lower (39) adapting profile section and with a lower end strip (46) making this panel equivalent, in hooking-retention, to a box panel.

8. Cover according to Claim 7, characterised in that the upper adapting profile section (38) has an upper horizontal face (40), two vertical wings (41 and 42) projecting downwards along the front edge and locking the upper end of the plate, and a downwards return (43) of bulged form with a plane median linear bearing zone (44).

9. Cover according to Claim 7, characterised in that the adapting lower profile section (39) has a longitudinal trough (45) for retention of the lower edge of the plate, the outer longitudinal edge of the trough extending downwards along the lower end strip (46) and the inner longitudinal edge extending in a flat profile (47) along a slanting bearing ramp (48) permitting the mounting-immobilisation thereof on the bearing lower profile section (6).

10. Cover according to Claim 1, characterised in that the lateral connecting profile sections comprise a front face plate having front lateral wings covering the lateral edges of the adjacent panels; and in that the front face plate of the lateral connecting profile sections is reinforced at the rear by a tubular hooking structure ended in the lower part by a hooking nose.

11. Cover according to Claim 10, characterised in that the wings forming the front face plate are formed of a single plane.

12. Cover according to Claims 10 and 11, characterised in that the plane plate has a tubular hooking structure (50) with a rectangular section, of a transverse thickness corresponding to that of the panels, ended at the base by a hooking nose (51).

13. Cover according to Claims 10 and 11, characterised in that the front face plate forms a recessed or projecting dihedron and has a rear tubular structure (57 or 58) with a square section ended at the base by, respectively, a narrow (59) or wide (60) anchoring nose, to form lateral connecting profile sections with a projecting (54) or recessed (55) right angle.

14. Cover according to Claims 10 and 11, characterised in that the plate forming a recessed or projecting open angle has a rear tubular structure (65 and 66) of a thickness corresponding to that of the panels, with a recessed (67) or projecting (68) split vertical rear end, ended at the base by a hooking nose which is, respectively, double and narrow (69) or single and wide (70).

15. Cover according to Claims 10 and 11, characterised in that the plate has a tubular rear structure (74) with a thin rectangular section, of a thickness corresponding to that of the panels, ended at the base by a hooking nose (75), the structure being borne on one or other wing of the front face plate.

16. Cover according to Claims 10, characterised in that the lateral connecting profile sections have two adjacent wings (78 and 79) forming a right angle, one being higher than the other and projecting at the upper end to delimit a bearing shoulder (80); and in that the connecting profile sections have a tubular rear hooking structure (81) of rectangular section ended at the top by an upper edge (83) at the rear of the upper wing and at the base by a lower hooking nose (82).

17. Cover according to Claim 10, characterised in that the front face plate has a vertical clip which is open at the rear or at the front for the accommodation and adjustment of a transverse plate (84).

18. Cover according to Claim 1, characterised in that at least one of the bearing lower profile sections (6) and retaining upper profile sections (7) has hooking shapes for the complementary elements forming, respectively, the lower closure (24) or upper protection (25).

19. Cover according to Claim 1, characterised in that the upper cover (25) comprises hoods arranged as a tunnel, either secured (125) or double and sliding (123,124).

20. Cover according to Claim 1, characterised in that each upper panel (121) has a front end strip (151) projecting downwards in a vertical manner, said strip coming into a blocking position against the front face (131) of the front profile section (126).

21. Cover according to Claim 1, characterised in that the connecting profile sections (128,129) are formed of a plate (152,163) having, on the underside, a tubular structure (154,165) for reinforcement or mounting, this structure being, in the vicinity of its rear end, of a thickness corresponding to the height of the accommodating cavity (134) of the encasing rear profile section (127), and comprising, in the vicinity of its front end, a bearing-blocking profile (158,167) analogous to that of the upper panels (121) and, in the vicinity of its opposite end, a vertical return (160,164); and in that the connecting profile sections (128,129) have, at one side, at least one covering wing (161, 162) projecting laterally and covering the lateral edge of the adjacent panel, for the purpose of completing the encasement of the assembly; and in that the end profile sections (129) comprise an end strip (169) arranged at a right angle along one of the sides of the plate (152).

22. Cover according to Claim 1, characterised in that on at least one side of the central profile section (120), the lateral plates (118, 119 or 189) are articulated on the lower bearing lateral profile section (6 or 176, 177).

23. Cover according to Claim 1, characterised in that, at least on one side of the central profile section (120), the lateral plates (118, 119 or 189) are articulated on the central profile section (120).

24. Cover according to Claim 1, characterised in that the plates (118, 119 or 189) comprise, along a longitudinal edge (190), a transverse wing (191) of an edge connected to a hooking-articulation end (192) which is curved in a returning manner, the central profile section (120) or the longitudinal profile sections (6 or 176,177) comprising a hooking-articulation return (186,188) curved in a complementary shape; and in that the plates (118,119,189) are arranged on at least a bearing profile (6 or 176,177) by means of one bearing and immobilisation means projecting over the opposite longitudinal edge (194); and in that the bearing and immobilisation means is one or more latches (195) each of which has a retractable finger (198) sliding between a retracted position behind the end edge (194) and an extended position, in which the operative end (201) of the finger (198) projects in front of the end edge (194).

## Patentansprüche

1. Schutz- und Isolationsverkleidung für eine Transporteinheit in Art eines Förderers oder dgl., bestehend aus einer Folge von Platten, dadurch gekennzeichnet, daß die Seitenwand durch seitlich angeordnete Platten (2) gebildet ist, welche zwischen einem unteren Längstragprofil (6,176,177) und einem oberen Längshalteprofil (7,126) abnehmbar festgelegt und seitlich durch ebenfalls abnehmbare seitliche Verbindungsprofile (3,4,5) voneinander getrennt sind, wobei die Platten (2) und Verbindungsprofile nebeneinander angeordnet und an den Längsprofilen (6,7, 126,176,177) durch einfaches Ineinanderstecken oben und Aufliegen unten bei gleichzeitiger Querfestsetzung festgelegt sind, um eine vollständige, an alle Kurven- oder Bahnformen eines Förderers anpaßbare Seitenwand (1) auszubilden, daß die obere Abdeckung durch zwei Längstragprofile, vorne zum Halten (7,126) und hinten zum Ineinanderstecken (127), und eine Folge von rinnenförmigen Hauben (123,124,125), Klappen (122) und/oder oberen abnehmbaren Platten (121) gebildet ist, wobei letztere mittels Verbindungsprofilen (128,129) nebeneinander angeordnet und durch einfaches Einstecken in eine geradlinige Aufnahme-/Verschachtelungslängshöhlung (134) des hinteren Einsteck-Tragprofils (127) festgelegt sind, und daß die untere Abdeckung durch zwei untere Längstragprofile (6,176,177), welche Schulter an Schulter entsprechend jeder der einander gegenüberliegenden Seitenwände angeordnet sind, ein rinnenförmiges, zentrales Rückgewinnungsprofil (120) und eine Verschlußplatteneinheit (118,119 oder 189) gebildet ist, wobei letztere auf beiden Seiten zwischen dem Zentralprofil (120) und jedem Längsprofil (6,176,177) geneigt angeordet ist, um so eine zweifach geneigte Ebene auszubilden, wobei die Verschlußplatten (118,119 oder 189) an jedem Längsprofil und den Kanten des Zentralprofils (120) durch einfaches Einhängen bei gleichzeitiger Schwenkbarkeit und Auflegen bei gleichzeitiger Festsetzung gehalten sind.

2. Verkleidung nach Anspruch 1, dadurch gekennzeichnet, daß das obere Halteprofil (7) eine nach unten geöffnete, geradlinig verlaufende Aufnahme (21), um das obere Ende der Platten (2) und seitlichen Verbindungsprofile zum Halten in ihrem oberen Bereich einzuführen und an seiner Oberseite (20) auskragende Längsstrukturen (26) oder Schienen (27,27) aufweist, welche mit den Enden der oberen Platten und Abdeckungen zusammenwirken.

3. Verkleidung nach Anspruch 1, dadurch gekennzeichnet, daß das untere Tragprofil (6) in seinem oberen Bereich eine Tragkante (14) aufweist und an jeder Seite mit einer ebenen Seitenfläche (10,11) versehen ist, um die Platten (2) und seitlichen Verbindungsprofile unten durch Abstützung bei gleichzeitiger Querfestsetzung zu halten.

4. Verkleidung nach einem der vorangehenden Ansprüche, dadurch gekennzeichnet, daß die Platten (2) und seitlichen Verbindungsprofile einen oberen Rand aufweisen, dessen Stärke zuzüglich Spiel etwa der Breite der geradlinigen Aufnahme (21) des oberen Halteprofils (7) entspricht.

5. Verkleidung nach einem der Ansprüche 3 oder 4, dadurch gekennzeichnet, daß die Platten (2) und seitlichen Verbindungsprofile entlang ihres unteren Randes eine Profilausbildung zur Auflage und zum Festsetzen aufweisen, die mit derjenigen der Tragkante (14) des unteren Profils (6) und seiner benachbarten Formen zusammenwirkt.

6. Verkleidung nach Anspruch 1, dadurch gekennzeichnet, daß die Platten (2,36) in Art einer einen isolierenden und schalldämmenden Komplex in einer an ihrer Rückseite perforierten Umhüllung enthaltenden Kassette oder einer blickdichten oder transparenten Tafel ausgebildet sind.

7. Verkleidung nach Anspruch 6, dadurch gekennzeichnet, daß die oberen und unteren Ränder der Tafel der Platten/Tafeln (36) mit einem oberen (38) und unteren (39) Anpaßprofil und einem unteren Endstreifen (46) versehen sind, die bei dieser Platte für ein Aufhängen und Halten wie bei einer Wandkassette sorgen.

8. Verkleidung nach Anspruch 7, dadurch gekennzeichnet, daß das obere Anpaßprofil (38) eine horizontal verlaufende Oberseite (40), zwei nach unten entlang der Vorderkante vorkragende, vertikale, das obere Ende der Tafel einspannende Flügel (41,42) und eine nach unten gewölbte, einen mittleren, geradlinig verlaufenden, ebenen Anlagebereich (44) aufweisende Rückführung (43) aufweist.

9. Verkleidung nach Anspruch 7, dadurch gekennzeichnet, daß das untere Anpaßprofil (39) eine Längsvertiefung (45) zum Halten des unteren Randes der Tafel aufweist, daß der äußere Längsrand der Vertiefung nach unten gemäß dem unteren Endstreifen (46) und der innere Längsrand in Form eines waagerechten Profils (47) verläuft, gefolgt von einer geneigten Auflagerampe, welche das Festlegen und Festsetzen am unteren Tragprofil (6) ermöglicht.

10. Verkleidung nach Anspruch 1, dadurch gekennzeichnet, daß die seitlichen Verbindungsprofile an der Vorderseite eine Grundplatte mit zwei vorderen Seitenflügeln aufweisen, die die Seitenränder der benachbarten Platten abdecken, und daß die Grundplatte an der Vorderseite der seitlichen Verbindungsprofile rückwärtig durch eine im unteren Bereich durch eine Einhängezunge begrenzte rohrförmige Hängestruktur verstärkt ist.

11. Verkleidung nach Anspruch 10, dadurch gekennzeichnet, daß die die vordere Grundplatte bildenden Flügel durch eine einzige Ebene gebildet sind.

12. Verkleidung nach Anspruch 10 und 11, dadurch gekennzeichnet, daß die ebene Grundplatte eine rohrförmige Hängestruktur (50) rechtwinkligen Querschnitts aufweist, deren Quererstreckung derjenigen der Platten entspricht und die nach unten durch eine Einhängezunge (51) begrenzt ist.

13. Verkleidung nach den Ansprüchen 10 und 11, dadurch gekennzeichnet, daß die vordere Grundplatte einen überstumpfen bis spitzen Öffnungswinkel ausbildet und eine rückwärtige rohrförmige Struktur (57 oder 58) quadratischen Querschnitts aufweist, die nach unten durch eine jeweils feine (59) oder breite (60) Einhängezunge begrenzt ist, um vorspringende (54) bzw. einspringende (55), rechtwinklige seitliche Verbindungsprofile zu bilden.

14. Verkleidung nach den Ansprüchen 10 und 11, dadurch gekennzeichnet, daß die einen überstumpfen bis spitzen Öffnungswinkel bildende Grundplatte eine rückwärtige rohrförmige Struktur (65 oder 66) mit einer derjenigen der Platten entsprechenden Stärke aufweist, deren rückwärtiges, vertikales, einspringendes (61) oder vorspringendes (68) Doppelende nach unten durch eine doppelte und schmale (69) oder einfache bzw. breite (70) Einhängezunge begrenzt ist.

15. Verkleidung nach Anspruch 10 und 11, dadurch gekennzeichnet, daß die Grundplatte eine rückwärtige rohrförmige Struktur (74) schmalen rechtwinkligen Querschnitts mit einer derjenigen der Platten entsprechenden Stärke aufweist, die nach unten durch eine Einhängezunge (75) begrenzt ist, wobei die Struktur an dem einen oder anderen Flügel der vorderen Platine angesetzt ist.

16. Verkleidung nach Anspruch 10, dadurch gekennzeichnet, daß die seitlichen Verbindungsprofile zwei einen rechten Winkel ausbildende, einander benachbarte Flügel (78,79) aufweisen, von denen einer den anderen an Höhe übertrifft und am oberen Ende überragt, um eine Anlageschulter (80) abzugrenzen, und daß die Verbindungsprofile eine rückwärtige rohrförmige Hängestruktur (81) rechteckigen Querschnitts aufweisen, welche nach oben durch eine obere Schrägkante (83) an der Rückseite des oberen Flügels und nach unten durch eine untere Einhängezunge (82) begrenzt ist.

17. Verkleidung nach Anspruch 10, dadurch gekennzeichnet, daß die Grundplatte an der Vorderseite ein vertikales, nach hinten oder vorne geöffnetes Klemmstück zur Aufnahme und zum Festsetzen einer Quertafel (84) aufweist.

18. Verkleidung nach Anspruch 1, dadurch gekennzeichnet, daß zumindest eines der unteren Tragprofile (6) und oberen Halteprofile (7) Ausbildungen zum Einhängen von Komplementärelementen aufweist, welche jeweils den unteren Verschluß (24) oder oberen Schutz (25) bilden.

19. Verkleidung nach Anspruch 1, dadurch gekennzeichnet, daß die obere Abdeckung (25) tunnelartig ausgebildete, entweder feste (125) oder doppelte und verschiebbare (123,124) Hauben aufweist.

20. Verkleidung nach Anspruch 1, dadurch gekennzeichnet, daß jede obere Platte (121) eine vertikal nach unten vorkragende vordere Endleiste (151) aufweist, welche an der Vorderseite (131) des vorderen Profils (126) zur Blockieranlage gelangt.

21. Verkleidung nach Anspruch 1, dadurch gekennzeichnet, daß die Verbindungsprofile (128,129) durch eine Grundplatte (152,163) gebildet sind, welche an ihrer Unterseite eine rohrförmige Verstärkungs- und Einbaustruktur (154,165) aufweist, deren Stärke in Höhe ihres rückwärtigen Endes der Höhe der Aufnahmehöhlung (134) des rückwärtigen Aufnahmeprofils (127) entspricht und die in Höhe ihres vorderen Endes ein Anlage-/Blockierprofil (158,167) gleich dem der oberen Platten (121) und in Höhe ihres entgegengesetzten Endes eine vertikale Rückführung (160,164) aufweist, daß die Verbindungsprofile (128,129) an einer Seite zumindest einen Abdeckflügel (161,162) aufweisen, welcher seitlich vorsteht und den seitlichen Rand der benachbarten Platte abdeckt, um die Verschachtelung der Einheit ineinander zu vervollständigen, und daß die Endprofile (129) eine Endleiste (169) aufweisen, welche unter rechtem Winkel entlang einer der Seiten der Grundplatte (152) angeordnet ist.

22. Verkleidung nach Anspruch 1, dadurch gekennzeichnet, daß zumindest an einer Seite des Zentralprofils (120) Seitentafeln (118,119 oder 189) am unteren seitlichen Tragprofil (6 oder 176,177) angelenkt sind.

23. Verkleidung nach Anspruch 1, dadurch gekennzeichnet, daß zumindest an einer Seite des Zentralprofils (120) Seitentafeln (118,119 oder 189) am Zentralprofil (120) angelenkt sind.

24. Verkleidung nach Anspruch 1, dadurch gekennzeichnet, daß die Tafeln (118,119 oder 189) entlang eines Längsrandes (190) einen angesetzten transversalen Randflügel (191) mit rückgebogenem Ende (192) zum Schwenkeinhängen aufweisen, wobei das Zentralprofil (120) oder die Längsprofile (6 oder 176,177) eine Hänge-/Schwenkrückführung (186,188) entgegengesetzt gekrümmter Ausführung aufweisen, und daß die Tafeln (118,119,189) an zumindest einem Tragprofil (6 oder 176,177) mittels einer vom gegenüberliegenden Längsrand (194) vorkragenden Anlage-/Festlegeinrichtung angeordnet sind und daß die Anlage-/Festlegeinrichtung durch einen oder mehrere Schnappriegel (195) gebildet ist, welche jeweils einen einfahrbaren Finger (198) aufweisen, der zwischen einer eingefahrenen Stellung hinter dem Endrand (194) und einer ausgefahrenen Stellung verlagerbar ist, in der das wirksame Ende (201) des Fingers (198) vor dem Endrand (194) hervorragt.
